(19) **Europäisches Patentamt / European Patent Office / Office européen des brevets**

(11) **EP 4 411 623 A1**

(12) # EUROPEAN PATENT APPLICATION

(43) Date of publication:
**07.08.2024 Bulletin 2024/32**

(21) Application number: **24154889.0**

(22) Date of filing: **31.01.2024**

(51) International Patent Classification (IPC):
**G06Q 40/04** $^{(2012.01)}$

(52) Cooperative Patent Classification (CPC):
**G06Q 40/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 US 202318106257**

(71) Applicant: **Chicago Mercantile Exchange Inc.**
**Chicago IL Illinois 60606 (US)**

(72) Inventors:
• **VU, Lisa**
  **Chicago, 60606 (US)**
• **SCHEERER, John Paul**
  **Chicago, 60606 (US)**
• **BAILEY, James Allen**
  **Chicago, 60606 (US)**
• **KONDURU, Dileep Chakravarthi**
  **Chicago, 60606 (US)**
• **HAYNES, Matthew Wayne**
  **Chicago, 60606 (US)**
• **GLOVER, Andrew**
  **Chicago, 60606 (US)**
• **PASO, Andrew Peter**
  **Chicago, 60606 (US)**
• **DHILLON, Supreet**
  **Chicago, 60606 (US)**
• **SHIVASHANKAR, Aditya Shivashankar**
  **Chicago, 60606 (US)**

(74) Representative: **Boult Wade Tennant LLP**
**Salisbury Square House**
**8 Salisbury Square**
**London EC4Y 8AP (GB)**

(54) ## PERFORMANCE OBFUSCATION TO MAINTAIN USER EXPECTATIONS

(57) A system receives incoming electronic data request messages. A match engine of the system attempts to match requests within the electronic data request messages and the time taken to perform the computations to attempt to match the requests is correlated to the processing capacity of the system. To prevent or slow formation of performance expectations, an obfuscation delay is applied to a selected outgoing electronic data message associated with at least one of the requests to reduce the correlation between the apparent time taken to perform the computations based on a timing indication in outgoing messages reporting result of an attempted match for a request and the processing capacity of the system.

Fig. 4

**Description**

BACKGROUND

Various multi-participant transaction networks allow traders to submit requests via electronic data messages and receive confirmations, market data, and other information electronically via a network. Electronic marketplaces provide access to public market information, such as public data, e.g. market data, prices, etc. or changes thereto, to all market participants, and additionally communicate private data, e.g. order status and the responses thereto to the trader submitting an order. As such improvements have been deployed by electronic trading systems, traders have adapted their electronic trading systems in an almost symbiotic manner so as to ensure that, for example, they can receive and react to changes in the electronic markets as quickly and efficiently as possible.

However, as electronic trading systems are improved and become more efficient, traders may need to further adapt their trading systems to keep pace with those improvements so as to maintain, for example, their ability to receive and react to changes in the electronic markets as quickly and efficiently as possible. Thus, traders may develop static expectations with regard to the performance of various legs of the system. This leads to high user experience sensitivity to changes in performance, including performance changes to due to upgrades to the system. Thus, there is a need for trading systems in which changes in underlying performance can be implemented, but at the same time, user expectations regarding performance can be maintained.

BRIEF DESCRIPTION OF THE DRAWINGS

Figure 1 shows an illustrative computer network system for use with various implementations.
Figure 1A shows an example message management system.
Figure 2 shows an illustrative implementation of a general computer system configured for use with various implementations.
Figure 3 shows an example system for application of obfuscation delays according to various implementations.
Figure 4 shows example obfuscation logic according to various implementations.
Figure 5 shows a swim lane diagram of an illustrative example obfuscation process.

DETAILED DESCRIPTION

In various electronic trading systems, requests from participants may be sent to a centralized reception data center, one or more distributed reception deployments, and/or various other electronic message reception systems. Once received, the request specified in the incoming electronic data message may be held for processing in a deterministic manner, e.g., in the order in which the message was received.

During processing of the incoming request, the system may attempt to match the incoming request, which as discussed below, may involve data comparisons between the incoming request and previous 'resting' requests that were at least partially unmatched previously. The system then may generate messages consistent with the outcome of the attempted match. As a result, the time taken to process the incoming message may be dependent on the technical computational capacity of the system, e.g., the speed at which the system performs the data comparisons and/or the speed at which the system generates the messages consistent with the outcome. Because larger volume requests often require a larger number of data comparisons and/or often require a larger number of messages to be generated as a result of the outcome of the matching, larger volume requests take longer on average to for a given processing system to complete. In other words, they are likely require more computational operations to be performed than smaller volume requests. This variation in processing may be referred to as deterministic non-determinism, as these performance variations between transactions may be non-deterministic but the processing performance on a transaction by transaction basis is deterministic.

Thus, participants may develop expectations based on the 'feel' of the system, e.g., the system's reactivity to their own or other's inputs. For example, participants may develop expectations regarding the time taken from submission of a request to execution of actions associated with that request to receipt of a confirmation thereof. This interval may be affected by both latency (e.g., the time a request is held waiting for match processing after reception of the corresponding electronic data message), and processing time (e.g., the time taken to match process the request). Accordingly, participants may, in some cases, develop performance expectations when performing no more than the minimum actions needed to make a request to the system.

After processing of the incoming request, various outgoing electronic data messages corresponding to the incoming request may be added to a publication queue for outbound sending to report the results of the attempted match result for the incoming request. Timestamps, tags, and/or other time indications with the generated messages may detail various timings or other indicators of message handling that influence perceived performance of the system. For example, an outgoing message may include a receipt timestamp indicating the receipt time by the system of a corresponding incoming message including the request being reported in the outgoing message. For example, an outgoing message may include a processing start timestamp indicating the time at which match processing began for the corresponding incoming message. For example, an outgoing message may include a send timestamp indicating when the outgoing message itself was sent out by the system. Using various time indications, a participant may determine other durations. For example, comparing the example receipt timestamp and processing start timestamp may provide the participant with a measure of the latency between receipt and processing. For example, comparing the processing start timestamp and the send timestamp may provide the participant with a measure of the match processing duration for the request associated with the outgoing message. In various implementations, values that can be determined by comparing timestamps may in some cases be directly reported in tag values included in the outgoing message. For example, an outgoing message may include a receipt-to-processing latency tag, a processing duration tag, and/or other indicators of durations within the system. Accordingly, static expectations regarding system performance electronic trading system performance may be derived from these messages. Thus, during normal observation of overall trading system activity, participants may use timing indicators to confirm timing expectations formed in part based on their own requests and/or the timing indications themselves may serve as another independent source of performance expectations.

As an illustrative example, a participant may monitor system reactivity to their own inputs and/or monitor processing durations for a sampling of requests and determine an expected time of processing completion as a function of request volume. Accordingly, via reception of and/or monitoring of multiple outgoing messages, a participant may develop expectations regarding expected processing times for messages and overall trading system performance. Based on these expectations, participants may develop their own trading systems to receive, process and react to incoming market data expecting deterministic results therefrom. Thus, a statistically significant change present in the above discussed indicators may be noticed based on a single request in some cases (a change may be identified based on more than one request in some cases).

Because a single message can generate the perception of a performance change in some cases, participants may perceive a large instantaneous rate of change in system performance. In some cases, such large instantaneous rates of change may lead to degradation in user experience. Participants may configure automated systems and/or other responsive systems based on the performance expectations for the electronic trading system. Although these automated systems may support reconfigurability/retraining, high rates of instantaneous change in performance may be disruptive to their operation if the instantaneous rate of change exceeds the rate of reconfigurability such systems. There is a previously unrecognized need for techniques and architectures that reduce the perceived correlation between system performance and requests having particular characteristics, such as a type of request or the magnitude of the requested quantity, e.g., volume. Reducing the outward appearance of determinism in system performance may work to reduce the correlation. For example, adding a randomizing factor to processing time may increase the necessary sample size to determine the current performance of the system. This may increase the time needed to collect the sample. This may reduce the instantaneous rate of change perceived by participants since the collecting of the data to accurately resolve the performance of the system will take longer.

Even when the randomizing factor is not actually random from the standpoint of system operators, the external appearance of randomization may still operate to reduce the speed at which perceptions of system performance can be formed through observation by participants. In some implementations, the randomization factor may be reported in system messages for transparency. Thus, the actual system performance can be eventually known to participants through observation, in some implementations. Nevertheless, the outwardly appearing non-deterministic factor may still operate to prevent and/or slow real-time instantaneous formation of perceptions of system performance. In cases of low-latency system operation, preventing instantaneous formation of performance perceptions for a period of 100 milliseconds or less may be sufficient to prevent actual performance changes from having any effect on user experience. In other words, as long as participants have an equitable and/or sufficient time to react and/or reconfigure their own systems to adjust to changes, such changes may not necessarily be perceived negatively.

Additionally or alternatively, an operator may deploy an upgrade to a match processing system that results in an increase in match processing speed. In some cases, deploying the upgrade a single large increase in system performance may be disruptive to and/or unexpected by participants. In some cases, it may be desirable to deploy an upgrade in smaller portions over time to reduce disruptions to usage and/or unexpected performance levels by participants. Nevertheless, deploying upgrades in phased rollouts may be impossible or impractical in many situations where a particular upgrade is unitary in nature (e.g., unable to be split into smaller operable components). Even in cases where an upgrade is non-unitary, partitioning the upgrade and/or scheduling additional deployments may increase the total cost of the upgrade, increase system downtime, and/or increase personnel needed to support the deployment. Accordingly, it may still be desirable to deploy an upgrade as a single unit or in multiple portions even if each deployment results in larger than desired instantaneous improvements to system performance. Additionally or alternatively, it may be desirable to control the apparent timing of a deployment-instead of the improvement occurring as soon as the upgrade is deployed, an operator may desire to retain the ability to hide the effect of upgrade until some later time.

To reduce the speed at which performance expectations are formed and/or allow controlled deployment/unveiling of functional upgrades to the underlying processing system, the techniques and architectures discussed herein implement an obfuscation delay for selected outgoing messages generated in response to incoming requests. The application of the obfuscation delay to the outgoing messages reduces or otherwise disrupts the correlation between the apparent processing time for the incoming request and the volume of that request. Thus, the timing adjustments to system operation provided by the application of obfuscation delay allow for operator control of both the feel and reactivity of the system experienced through direct user interaction and the perceived performance of the system derivable through observation of timing indications for the match processing duration. Thus, operators have the flexibility to maintain continuity of experience by mitigating the perception of changes in system performance.

The obfuscation delays discussed herein may be used to mask the effects of system upgrades or a portion thereof. For example, by delaying every message by an amount proportional to a gain from a system improvement, the obfuscation delays may be used to mask all of a portion of the performance increase to create the appearance that the system has been improved less than it has in actuality. In an illustrative example scenario, an example system upgrade may increase the match processing speed of the system by 30%. An obfuscation delay may be used to delay messages an amount such that the apparent improvement is only 5%. Later, the delay may be reduced to unmask 10%, then 15%, then 20%, then 25%, and finally the full 30%. Accordingly, in the illustrative example scenario, the one-time improvement of 30% appears to be 6 smaller, less disruptive upgrades.

To implement the obfuscation delay operation, technical arrangements may be selected. Technical arrangements for an implementation may affect various technical implementation characteristics. For example, a technical arrangement may affect how, when, and what memory locations are accessed, which operations are performed on the data stored in those memory locations, the timing for the operations, and which order such operations are performed. Technical options may affect operation efficiency, calculation accuracy, computational load, memory usage, and various other technical characteristics. Thus, technical arrangements further improve the operation of the underlying hardware. For the purposes of illustration, two example technical arrangements are discussed below.

Publication Queue Delay (PQD) Arrangement - As an example of a technical arrangement for implementation of obfuscation delay operation, when outgoing data messages are placed in a publication queue for outbound sending, selected outgoing data messages are held in the queue for an additional obfuscation delay period. Accordingly, a selected outgoing data message is held in the publication queue for the duration of the obfuscation delay period regardless of whether computational and/or communication hardware resources to support earlier sending of the selected outgoing message. This provides the appearance to the message recipients that the processing of the request which caused generation of the message took longer than it actually did with actually delaying that processing. The PQD arrangement protects processing hardware resources used to the support the match engine and does not add to processing load these hardware resources.

The PQD arrangement reduces instantaneous throughput of the outgoing message handling of the system while a delay is applied. Thus, implementation the PQD arrangement may alter the instantaneous throughput balance of an electronic trading (relative to an otherwise equivalent system that does not implement such an arrangement). In various implementations, to account for the instantaneous reductions in throughput for outgoing messaging, the hardware underlying the publication queue may be selected to support outgoing message send capacities greater that which would support the average throughput from the match engine. Thus, after an applied delay is completed the publication queue may 'catch up' to the match engine by sending one or more subsequent outgoing messages (after the delayed outgoing message) closer together in time.

Further, the peak memory load of the publication queue may be increased as a result implementing a PQD arrangement because messages may be held in buffer memory of the publication queue longer resulting in greater number of total messages accumulating in the queue. Thus, a PQD arrangement may have increased publication queue memory requirements relative to implementations without a PQD arrangement.

The PQD arrangement may be used to delay the selected outgoing messages while the match engine continues to operate unaffected by the delay. Thus, the match engine may continue to add responsive outgoing messages to the publication queue even as the publication queue holds messages for the purpose of implementing the delay. In some cases, using increased publication throughput and memory capacity, the publication queue may accumulate outgoing messages while implementing a delay on a first message. Further, the PQD arrangement may be implemented without necessarily causing any effect to the timing of the match engine processing. Accordingly, in some implementations, each message in a PQD arrangement may be match processed with the exact same absolute timing that message would have been match processed in the absence of the PQD arrangement-the operational effects of the PQD arrangement cause changes instead to the appearance of the timing between completion of match processing (and the timing indications thereof) and transmission of corresponding outgoing messages. Because this will allow a 'catch-up', PQD arrangements may be implemented with little or no effect on average throughput even in near-capacity computing scenarios despite the effects on instantaneous throughput.

Processor Delay Cycling (PDC) Arrangement - As an example of a technical arrangement for implementation of obfuscation delay operation, a delay may be implemented by adding dummy cycles to processing that occurs while the incoming electronic data message is being processed by the match engine. In some implementations, increasing processor cycles may increase the total processing load by the match engine. A PDC arrangement may increase the apparent time of processing by adding dummy cycles but may not necessarily use that extra time to perform processing on other messages. Because match processing may tend to have greater computing resource requirements than other portions of the system, this additional processing load is likely to result in an average reduction in throughput by the system in near-capacity and/or at capacity computing scenarios. Accordingly, the PDC arrangement may cause increased receipt-to-processing latency in some cases. Thus, in some cases, the PDC arrangement may require increased received-message buffering capacity to accommodate the increased number of messages that accumulate while waiting to be match-processed. Nevertheless, the PDC arrangement may be more robust against instantaneous formation of performance expectations when other or additional forms of monitoring are implemented. For example, the PDC arrangement may have provide increased security when match engine activity data (e.g., such as hardware utilization data, temperature data, or other monitoring data) is used by participants. Furthermore, reports such as publication queue latency or other latency measures may result participants gaining awareness of the implementation of obfuscation delays when a PQD arrangement is used. Accordingly, the PDC arrangement may be opaquer to participants than, for example, PQD arrangements.

Various technical arrangement are possible, including arrangements that blend at least some features from the illustrative PQD arrangement and/or the PDC arrangement discussed above. For example, in an example implementation PQD arrangement delays may be implemented to obfuscate differences in processing durations among individual requests while PDC arrangement delays may be implemented to obfuscate an improvement to overall processing efficiency. In other words, the PDC arrangement delay may be used to control how and at what rate changes in processor operation are deployed while the PQD arrangement delays may be used in the same implementation to prevent instantaneous formation of performance expectations based on individual requests (or other small sample sizes). In another blended example, the PDC and PQD arrangements may be switched such that the PQD arrangement is used to hide information about global processing while the PDC arrangement is used to prevent instantaneous formation of performance expectations from individual requests. Other blended technical arrangements are possible.

As an illustrative context for the techniques and architectures discussed herein, one exemplary environment where request processing timing obfuscation is desirable is in electronic financial exchanges, such as a futures exchange, such as the Chicago Mercantile Exchange Inc. (CME). A financial instrument trading system, such as a futures exchange, such as the Chicago Mercantile Exchange Inc. (CME), provides a contract market where financial instruments, e.g., futures and options on futures, are traded using electronic systems. "Futures" is a term used to designate all contracts for the purchase or sale of financial instruments or physical commodities for future delivery or cash settlement on a commodity futures exchange. A futures contract is a legally binding agreement to buy or sell a commodity at a specified price at a predetermined future time. An option contract is the right, but not the obligation, to sell or buy the underlying instrument (in this case, a futures contract) at a specified price within a specified time.

The commodity to be delivered in fulfillment of the contract, or alternatively the commodity for which the cash market price shall determine the final settlement price of the futures contract, is known as the contract's underlying reference or "underlier." The terms and conditions of each futures contract are standardized as to the specification of the contract's underlying reference commodity, the quality of such commodity, quantity, delivery date, and means of contract settlement. Such standardization may improve the liquidity of these contracts, e.g. the ease with which such contracts may be bought or sold. In implementations described herein, terms and conditions of each futures contract may be partially standardized as to the specification of the contract's underlying reference commodity and attributes thereof. Options on futures may be similarly standardized as to, for example, quantity, strike price and expiration/maturity. The underlying reference commodity may include a range of possible qualities, quantities, delivery dates, and other attributes. For a spot market transaction, the underlying quality and attributes may be set, while a futures contract may provide predetermined offsets to allow for possible settlement of a non-conforming delivery. Physical settlement requires actual delivery of the underlying asset according to the contract terms. Cash settlement, by contrast, is a method of settling a futures contract whereby the parties effect final settlement when the contract expires by paying/receiving the loss/gain related to the contract in cash, rather than by effecting physical sale and purchase of the underlying reference commodity at a price determined by the futures contract. Options and futures may be based on more generalized market indicators, such as stock indices, interest rates, futures contracts and other derivatives.

An exchange may provide for a centralized "clearing house" through which trades made must be confirmed, matched, and settled each day until offset or delivered. The clearing house may be an adjunct to an exchange, and may be an operating division of an exchange, which is responsible for settling trading accounts, clearing trades, collecting and maintaining performance bond funds, regulating delivery, and reporting trading data. One of the roles of the clearing house is to mitigate credit risk. Clearing is the procedure through which the clearing house becomes buyer to each seller of a futures contract, and seller to each buyer, also referred to as a novation, and reduces risk of financial loss to each transacting party due to breach of contract by assuring performance on each contract. A clearing member is a firm qualified to clear trades through the clearing house.

An exchange computer system which operates under a central counterparty model acts, e.g., using the clearing mechanism described above, as an intermediary between market participants for the transaction of financial instruments. In particular, the exchange computer system interposes itself into the transactions between the market participants, i.e., splits a given transaction between the parties into two separate transactions where the exchange computer system substitutes itself as the counterparty to each of the parties for that part of the transaction. In this way, the exchange computer system acts as a guarantor and central counterparty and there is no need for the market participants to disclose their identities to each other, or subject themselves to credit or other investigations by a potential counterparty, as is done with bilateral trading. For example, the exchange computer system insulates one market participant from the default by another market participant. Market participants need only meet the requirements of the exchange computer system. Anonymity among the market participants further encourages a more liquid market environment as there are lower barriers to participation. The exchange computer system can accordingly offer benefits such as centralized and anonymous matching and clearing.

A "Clearing House," which is typically an adjunct to the Exchange and may be an operating division thereof, is responsible for settling trading accounts, clearing trades, collecting and maintaining performance bond funds, regulating delivery, and reporting trading data to market regulators and to the market participants. An essential role of the clearing house is to mitigate credit risk via the clearing process. Clearing is the procedure through which the Clearing House becomes buyer to each seller of a futures contract, and seller to each buyer, also referred to as a "novation," and assumes responsibility for protecting buyers and sellers from financial loss due to breach of contract, by assuring performance on each contract. A clearing member is a firm qualified to clear trades through the clearing house.

Electronic financial instrument trading systems may allow traders to submit orders (or other request operations) and receive confirmations, market data, and other information electronically via a network. These "electronic" marketplaces implemented by, and also referred to as, "electronic trading systems," are an alternative trading forum to pit based trading systems whereby the traders, or their representatives, all physically stand in a designated location, i.e. a trading pit, and trade with each other via oral and hand based communication.

The speed at which trades are executed through electronic trading systems provide many benefits. Electronic trading systems can facilitate a large number of market transactions. The greater the number of market transactions, the greater a market's liquidity. In liquid markets, prices are driven by competition, prices reflect a consensus of an investment's value, and trading systems provide a free and open dissemination of information. With the advent of improved computational and communications capabilities, the speed and efficiency with which traders may receive information and trade in electronic trading systems has greatly improved. Algorithmic and high frequency trading utilize computers to quickly analyze market information and place trades allowing traders to take advantage of even the smallest movements in prices.

To mitigate risk and ensure a fair and balanced market, electronic trading systems need to provide mechanisms to ensure that the operation of the underlying hardware of the electronic system does not appear to rapidly change in its performance.

The disclosed embodiments may relate to communication of data messages from an electronic trading system to market participants whereby messages, or at least a portion of the content thereof, indicative of changes in the market, due to one or more trades between two or more market participants, are structured so as to reduce redundant data therein and prioritize the transmission of that portion of the message which summarizes the event and result thereof. Further, these data messages may further consolidate, or otherwise be combined with, the corresponding directed reporting messages communicated to the particular market participants participating in the reported trade while preserving the anonymity of those market participants to which messages are particularly directed. In this way, redundant communications, as well as redundant data, may be eliminated, reducing the overall volume of data being communicated and the resources necessary in support thereof. Various examples of messaging systems are described in U.S. Pat. Application Ser. No. 14/100,788 filed December 9, 2013 now U.S. Pat. No. 9,697,569, which is incorporated by reference in its entirety herein.

Financial messages may further be categorized as having or reflecting an impact on a market or electronic marketplace, also referred to as an "order book" or "book," for a traded product, such as a prevailing price therefore, number of resting orders at various price levels and quantities thereof, etc., or not having or reflecting an impact on a market or a subset or portion thereof. For example a request to place a trade may result in a response indicative of the trade either being matched with, or being rested on an order book to await, a suitable counter-order. This response may include a message directed solely to the trader who submitted to the order to acknowledge receipt of the order and report whether it was matched, and the extent thereto, or rested. The response may further include a message to all market participants reporting a change in the order book due to the order. This response may take the form of a report of the specific change to the order book, e.g. an order for quantity X at price Y was added to the book (referred to as a Market By Order message), or may simply report the result, e.g. price level Y is now has 5 orders for a total quantity if Z (where Z is the sum of the previous resting quantity plus quantity X of the new order) (referred to as a Market By Price message). In some cases, requests may elicit a non-impacting response, such as temporally proximate to the receipt of the request and then cause a separate market-impact reflecting response at a later time. For example, a stop order, fill or kill order, aka an immediate or cancel order, or other conditional request may not have an immediate market impacting effect, if at all, until the requisite conditions are met. Accordingly, an acknowledgement or confirmation of receipt, e.g. a non-market impacting communication, may be sent to the trader simply confirming that the order was received. Upon the conditions being met and a market impacting result thereof occurring, a market-impacting message may be transmitted as described herein both directly back to the submitting market participant and to all market participants (in a Market By Price "MBP" or Market By Order "MBO" format). It will be appreciated that additional conditions may be specified, such as a time or price limit, which may cause the order to be dropped or otherwise canceled and that such an event may result in another non-market-impacting communication instead.

In some implementations market impacting communications may be communicated separately from non-market impacting communications, such as via a separate communications channel or feed. It will be further appreciated that various types of market data feeds may be provided which reflect different market or aspects thereof. Market participants may then, for example, subscribe to receive those feeds of interest to them. As market impacting communications tend to be more important to market participants then non-impacting communications, this separation may reduce congestion and or noise among those communications having or reflecting an impact on a market or portion thereof. Furthermore, a particular market data feed may only communicate information related to the top buy/sell prices for a particular product, referred to as "top of book" feed, e.g. only changes to the top 10 price levels are communicated. Such limitations may be implemented to reduce consumption of bandwidth and message generation resources. In this case, while a request message may be considered market-impacting if it affects a price level other than the top buy/sell prices, it will not result in a message being sent to the market participants. Generally, the disclosed embodiments relate to a restructuring of response messages reflecting market impacting events to reduce redundant data and convey more relevant information about the event to all market participants sooner than less relevant information so that the market participants may comprehend the event more quickly. Furthermore, the disclosed embodiments relate to consolidation of the communication of market impact reflecting response messages, e.g. responsive to inbound messages, with other market impact reflecting messages as will be described. In other implementations, these communications may or may not be further consolidated with non-market impacting messages.

Examples of the various types of market data feeds which may be provided by electronic trading systems, such as the CME, in order to provide different types or subsets of market information or to provide such information in different formats include Market By Order, Market Depth (aka Market by Price to a designated depth of the book), e.g. CME offers a 10-deep market by price feed, Top of Book (a single depth Market by Price feed), and combinations thereof. There may also be all manner of specialized feeds in terms of the content, i.e. providing, for example, derived data, such as a calculated index).

Market data feeds may be characterized as providing a "view" or "overview" of a given market, an aggregation or a portion thereof or changes thereto. For example, a market data feed, referred to as a Market By Price ("MBP") feed, may convey, with each message, the entire/current state of a market, or portion thereof, for a particular product as a result of one or more market impacting events. For example, an MBP message may convey a total quantity of resting buy/sell orders at a particular price level in response to a new order being placed at that price. An MBP message may convey a quantity of an instrument which was traded in response to an incoming order being matched with one or more resting orders. MBP messages may only be generated for events affecting a portion of a market, e.g. only the top 10 resting buy/sell orders and, thereby, only provide a view of that portion. As used herein, a market impacting request may be said to impact the "view" of the market as presented via the market data feed. An MBP feed may utilize different message formats for conveying different types of market impacting events. For example, when a new order is rested on the order book, an MBP message may reflect the current state of the price level to which the order was added, e.g. the new aggregate quantity and the new aggregate number of resting orders. As can be seen, such a message conveys no information about the resting orders, including the newly rested order, themselves to the market participants. Only the submitting market participant, who receives a separate private message acknowledging the event, knows that it was their order that was added to the book. Similarly, when a trade occurs, an MBP message may be sent which conveys the price at which the instrument was traded, the quantity traded and the number of participating orders, but may convey no information as to whose particular orders contributed to the trade. MBP feeds may further batch reporting of multiple events, i.e. report the result of multiple market impacting events in a single message.

Alternatively, a market data feed, referred to as a Market By Order ("MBO") feed, may convey data reflecting a change that occurred to the order book rather than the result of that change, e.g. that order ABC for quantity X was added to price level Y or that order ABC and order XYZ traded a quantity X at a price Y. In this case, the MBO message identifies only the change that occurred so a market participant wishing to know the current state of the order book must maintain their own copy and apply the change reflected in the message to know the current state. As can be seen, MBO messages carry much more data because they reflect any market impacting change. Furthermore, because specific orders, but not the submitting traders thereof, are identified, other market participants may be able to follow that order as it progresses through the market, e.g. as it is modified, canceled, traded, etc.

It will be appreciated that number, type and manner of market data feeds provided by an electronic trading system are implementation dependent and may vary depending upon the types of products traded by the electronic trading system, customer/trader preferences, bandwidth and data processing limitations, etc. and that all such feeds, now available or later developed, are contemplated herein. As such, MBP and MBO feeds may refer to categories/variations of market data feeds, distinguished by whether they provide an indication of the current state of a market resulting from a market impacting event (MBP) or an indication of the change in the current state of a market due to a market impacting event (MBO).

Messages, whether MBO or MBP, generated responsive to market impacting events which are caused by a single order, such as a new order, an order cancelation, an order modification, etc., are fairly simple and compact and easily created and transmitted. However, messages, whether MBO or MBP, generated response to market impacting events which are caused by more than one order, such as a trade, may require the transmission of a significant amount of data to convey the requisite information to the market participants. For trades involving a large number of orders, e.g. a buy order for a quantity of 5000 which matches 5000 sell orders each for a quantity of 1, a significant amount of information may need to be sent, e.g. data indicative of each of the 5000 trades that have participated in the market impacting event. Further, the time needed by the system to determine the 5000 matches and generate the corresponding outgoing messages while maintaining proper sequencing may be longer than that expected for 50 trades, for example.

Messages may further include time stamps. By comparing timestamps, participants may determine when messages where received and/or sent by the electronic trading system. Further, participants may be able to assess relative delays between messages, message order, and determine when a particular feed last published an event message and/or a message of another type.

A match engine module, such as one implemented by CME, may be centralized and coupled to multiple inputs from customers, and behave deterministically, e.g., programmed to depend on state, inputs and outputs. While various implementations may be described in some examples with respect to a product by product or market by market implementation, e.g. implemented for each market/order book, it will be appreciated that the disclosed implementations may be applied across markets for multiple products traded on one or more electronic trading systems, such as by monitoring an aggregate, correlated or other derivation of the relevant indicative parameters as described herein.

While various implementations may be described in some examples with respect to futures and/or options on futures trading, it should be appreciated that the disclosed implementations may be applicable to any equity, fixed income security, currency, commodity, options or futures trading system or market now available or later developed. It should be appreciated that a trading environment, such as a futures exchange as described herein, implements one or more economic markets where rights and obligations may be traded. As such, a trading environment may be characterized by a need to maintain market integrity, transparency, predictability, fair/equitable access and participant expectations with respect thereto. For example, an exchange must respond to inputs, such as trader orders, cancelations, etc., in a manner as expected by the market participants, such as based on market data, e.g., prices, available counter-orders, etc., to provide an expected level of certainty that transactions will occur in a consistent and predictable manner and without unknown or unascertainable risks. In addition, it should be appreciated that electronic trading systems further impose additional expectations and demands by market participants as to transaction processing speed, latency, capacity and response time, while creating additional complexities relating thereto. Accordingly, as will be described, the disclosed implementations may further include functionality to ensure that the expectations of market participants are met, e.g., that transactional integrity and predictable system responses are maintained.

Financial instrument trading systems allow traders to submit orders and receive confirmations, market data, and other information electronically via electronic messages exchanged using a network. Electronic trading systems ideally attempt to offer an efficient, fair and balanced market where market prices reflect a true consensus of the value of traded products among the market participants. Electronic marketplaces attempt to achieve these goals by using electronic messages to communicate actions and related data of the electronic marketplace between market participants, clearing firms, clearing houses, and other parties. The messages can be received using an electronic trading system, wherein an action or transaction associated with the messages may be executed. For example, the message may contain information relating to a request to buy or sell a product in a particular electronic marketplace, and the action associated with the message may indicate that the order is to be placed in the electronic marketplace such that other request operations which were previously placed may potentially be matched to the request operation of the received message. Thus the electronic marketplace may conduct market activities through electronic systems.

The clearing house of an exchange clears, settles and guarantees matched transactions in contracts occurring through the facilities of the exchange. In addition, the clearing house establishes and monitors financial requirements for clearing members and conveys certain clearing privileges in conjunction with the relevant exchange markets.

The clearing house establishes clearing level performance bonds (margins) for all products of the exchange and establishes minimum performance bond requirements for customers of such products. A performance bond, also referred to as a margin requirement, corresponds with the funds that must be deposited by customers with their brokers, by a broker with a clearing member or by a clearing member with the clearing house, for the purpose of insuring the broker or clearing house against loss on open futures or options contracts. This is not a part payment on a purchase. The performance bond helps to ensure the financial integrity of brokers, clearing members and the exchange as a whole. The performance bond refers to the minimum dollar deposit required by the clearing house from clearing members in accordance with their positions. Maintenance, or maintenance margin, refers to a sum, usually smaller than the initial performance bond, which must remain on deposit in the customer's account for any position at all times. The initial margin is the total amount of margin per contract required by the broker when a futures position is opened. A drop in funds below this level requires a deposit back to the initial margin levels, i.e., a performance bond call. If a customer's equity in any futures position drops to or under the maintenance level because of adverse price action, the broker must issue a performance bond/margin call to restore the customer's equity. A performance bond call, also referred to as a margin call, is a demand for additional funds to bring the customer's account back up to the initial performance bond level whenever adverse price movements cause the account to go below the maintenance.

The exchange derives its financial stability in large part by removing debt obligations among market participants as they occur. This is accomplished by determining a settlement price at the close of the market each day for each contract and marking all open positions to that price, referred to as "mark to market." Every contract is debited or credited based on that trading session's gains or losses. As prices move for or against a position, funds flow into and out of the trading account. In the case of the CME, each business day by 6:40 a.m. Chicago time, based on the mark-to-the-market of all open positions to the previous trading day's settlement price, the clearing house pays to or collects cash from each clearing member. This cash flow, known as settlement variation, is performed by CME's settlement banks based on instructions issued by the clearing house. All payments to and collections from clearing members are made in "same-day" funds. In addition to the 6:40 a.m. settlement, a daily intra-day mark-to-the market of all open positions, including trades executed during the overnight GLOBEX®, the CME's electronic trading systems, trading session and the current day's trades matched before 11: 15 a.m., is performed using current prices. The resulting cash payments are made intra-day for same day value. In times of extreme price volatility, the clearing house has the authority to perform additional intra-day mark-to-the-market calculations on open positions and to call for immediate payment of settlement variation. CME's mark-to-the-market settlement system differs from the settlement systems implemented by many other financial markets, including the interbank, Treasury securities, over-the-counter foreign exchange and debt, options, and equities markets, where participants regularly assume credit exposure to each other. In those markets, the failure of one participant can have a ripple effect on the solvency of the other participants. Conversely, CME's mark-to-the-market system does not allow losses to accumulate over time or allow a market participant the opportunity to defer losses associated with market positions.

Various implementations recognize that electronic messages such as incoming request messages from market participants, e.g., trade request messages, etc., are sent from market participants, or their representatives, to an electronic trading or market system. For example, a market participant may submit an electronic message to the electronic trading system that includes an associated specific action to be undertaken by the electronic trading system, such as entering a new trade order into the market or modifying an existing order in the market.

As used herein, a financial message, or an electronic message, refers both to messages communicated by market participants to an electronic trading or market system and vice versa. The messages may be communicated using packeting or other techniques operable to communicate information between systems and system components. Some messages, e.g., request messages, may be associated with actions to be taken in the electronic trading or market system. Financial messages communicated to the electronic trading system, also referred to as "incoming" messages, may include associated actions that characterize the messages, such as trader orders, order modifications, order cancelations and the like, as well as other message types. Financial messages communicated from the electronic trading system, referred to as "outgoing" messages, may include messages responsive to incoming messages, such as confirmation messages, or other messages such as market update messages, quote messages, and the like.

Outstanding (unmatched, wholly unsatisfied/unfilled or partially satisfied/filled) orders are maintained in one or more data structures or databases referred to as "order books," such orders being referred to as "resting," and made visible, i.e., their availability for trading is advertised, to the market participants through electronic notifications/broadcasts, referred to as market data messages or feeds. An order book, i.e., an order book database or data structure, is typically maintained for each product, e.g. instrument, traded on the electronic trading system and generally defines or otherwise represents the state of the market for that product, i.e. the current prices at which the market participants are willing buy or sell particular quantities of that product. As such, as used herein, an order book for a product may also be referred to as a market for that product. At any given time, an order book, or the market represented thereby, may be characterized by a state, i.e., the data records stored therein at that time which are indicative of the currently pending orders to buy or sell the particular products at particular quantities, and that state may change over time, i.e., as pending orders to buy/sell are at least partially satisfied by incoming counter orders resulting in updating, e.g., to reflect remaining available quantity, etc., or removing existing data records, as order modifications or cancelations are received and/or as new orders are received and data records indicative thereof are created. In various implementations, resting messages may remain resting until matched to a new incoming order rather than periodically resubmitting resting messages for matching. Thus, in various implementations, the matching process is purely a computational operation in which the time taken to match request is the time the hardware takes to perform the data comparisons and message generation related to that request. The time taken to process a request does not include time waiting for a matching order to arrive or other durations that cannot be shortened through improvements to processor operation.

A market data feed, also referred to as market data or a market feed, is a compressed or uncompressed real time (with respect to market events), or substantial approximation thereof, data/message stream, i.e., sequence of event generated messages, provided by the Exchange directly, or via a third party intermediary. As discuss briefly above, a market data feed may be comprised of individual messages, each comprising one or more packets or datagrams, and may carry, for example, pricing or other information regarding orders placed, traded instruments and other market information, e.g., data indicative of a change in the state of the order book database, such as summary values and statistical values, or combinations thereof created in real time, e.g., at the time of the change in state or substantially proximate thereto, and may be transmitted, e.g. multi-casted, to the market participants using standardized protocols, such as UDP over Ethernet.

More than one market data feed, each, for example, carrying different information, may be provided as will be described. The standard protocol that is typically utilized for the transmission of market data feeds is the Financial Information Exchange (FIX) protocol Adapted for Streaming (FAST), aka FIX/FAST, which is used by multiple exchanges to distribute their market data. It will be appreciated that other protocols may be used. Pricing/quantity information conveyed by the market data feed may include the prices/quantities, or changes thereto, of resting orders, prices at which particular orders were recently traded and/or quantities thereof, or other information representative of the state of the order book database/market or changes therein at the time that the market data was generated. Separate, directed/private, messages may also be transmitted directly to market participants to confirm receipt of orders, cancellation of orders and otherwise provide acknowledgment or notification of matching and other events relevant, or otherwise privy, only to the particular market participant.

As may be perceived/experienced by the market participants from outside the Exchange or electronic trading system operated thereby, the following sequence describes how, at least in part, information may be propagated in such a system and how orders may be processed:

(1) An opportunity is created at a matching engine of the Exchange, such as by placing a recently received but unmatched order, e.g. a data record indicative thereof, on the order book to rest;
(2) The matching engine creates an update reflecting the opportunity, e.g., based on the change in the state of the order book database, and sends it to a feed engine;
(3) The feed engine, also referred to herein as a data publisher, generates an electronic data message comprising data indicative of the update and multicasts it to all of the market participants to advertise the opportunity to trade;
(4) The market participants receive the data message and evaluate the opportunity and each, upon completion of their evaluation, may or may not choose to respond with an electronic trade order message comprising data indicative of a trade order responsive to the resting order, i.e. counter to the resting order;
(5) The Exchange gateway receives any counter orders generated by the market participants, sends confirmation of receipt back directly to each submitting market participant, and forwards the received orders to the matching engine; and
(6) The matching engine evaluates the received orders and matches the first arriving order against the resting opportunity and a trade is executed. This causes another change in the state of the order book database which may again, trigger this cycle.

While various implementations may be described in some examples with reference to a clearing house or exchange for purposes of enforcing a performance bond or margin requirement, other systems may be used. For example, a market participant may use the disclosed implementations in a simulation or other analysis of a portfolio. In such cases, the settlement price may be useful as an indication of a value at risk and/or cash flow obligation rather than a performance bond. The disclosed implementations may also be used by market participants or other entities to forecast or predict the effects of a prospective position on the margin requirement of the market participant.

The methods and systems described herein may be integrated or otherwise combined with various risk management methods and systems, such as the risk management methods and systems described in U.S. Patent No. 7,769,667 entitled "System and Method for Activity Based Margining", the entire disclosure of which is incorporated by reference herein and relied upon. For example, the methods and systems described herein may be configured as a component or module of the risk management systems described in the above-referenced patent. Alternatively or additionally, the disclosed methods may generate data to be provided to the systems described in the above-referenced patent. For example, the settlement prices determined by the disclosed implementations may be incorporated into margin requirement(s) determined by the risk management method or system.

In various implementations, the discussed architectures and techniques may be integrated or otherwise combined with the risk management system implemented by CME called Standard Portfolio Analysis of Risk™ (SPANO). The SPAN system bases performance bond requirements on the overall risk of the portfolios using parameters as determined by CME's Board of Directors, and thus represents a significant improvement over other performance bond systems, most notably those that are "strategy-based" or "delta-based." Further details regarding SPAN are set forth in the above-referenced patent.

The implementations may be described in terms of a distributed computing system. The particular examples identify a specific set of components useful in a futures and options exchange. However, many of the components and inventive features are readily adapted to other electronic trading environments. The specific examples described herein may teach specific protocols and/or interfaces, although it should be understood that the principles involved may be extended to, or applied in, other protocols and interfaces.

It should be appreciated that the plurality of entities utilizing or involved with the disclosed implementations, e.g., the market participants, may be referred to by other nomenclature, such as clearing firm or clearing entity, reflecting the role that the particular entity is performing with respect to the disclosed implementations and that a given entity may perform more than one role depending upon the implementation and the nature of the particular transaction being undertaken, as well as the entity's contractual and/or legal relationship with another market participant and/or the exchange.

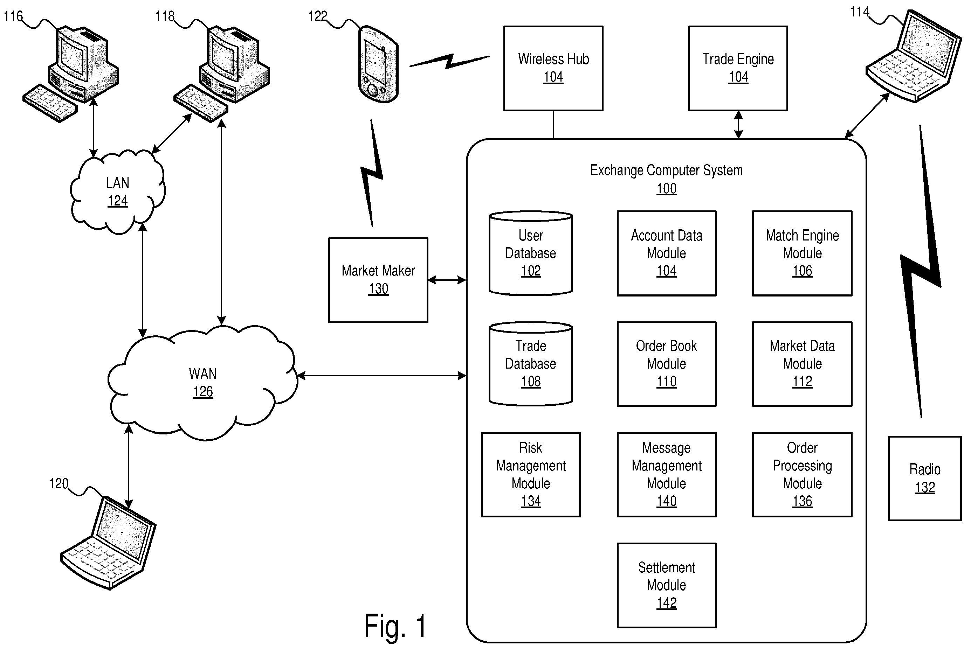

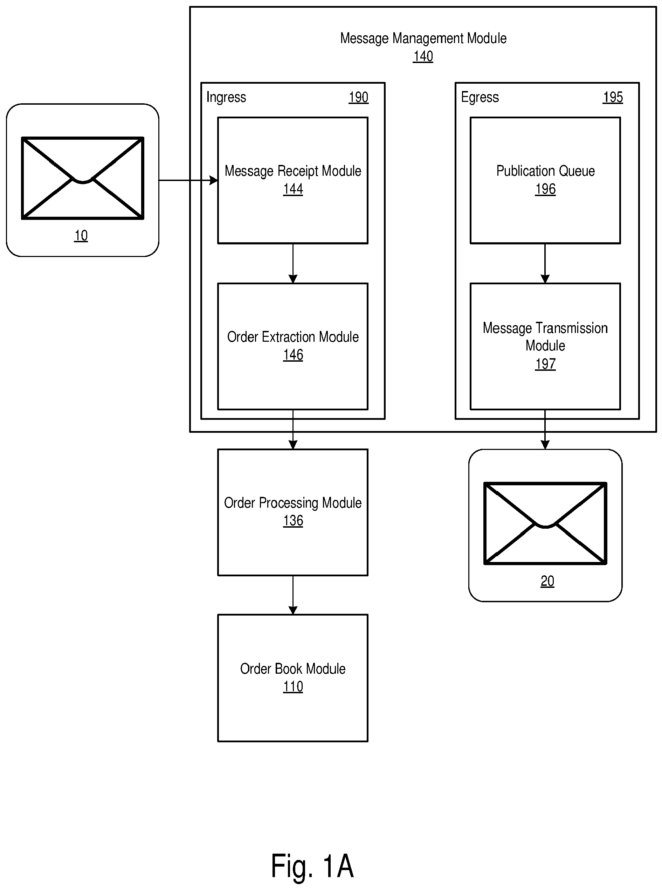

An exemplary trading network environment for implementing trading systems and methods is shown in Figure 1. An exchange computer system 100 receives messages that include orders and transmits market data related to orders and trades to users, such as via wide area network 126 and/or local area network 124 and computer devices 114, 116, 118, 120 and 122, as will be described below, coupled with the exchange computer system 100.

Herein, the phrase "coupled with" is defined to mean directly connected to or indirectly connected through one or more intermediate components. Such intermediate components may include both hardware and software based components. Further, to clarify the use in the pending claims and to hereby provide notice to the public, the phrases "at least one of <A>, <B>, ... and <N>" or "at least one of <A>, <B>, ... <N>, or combinations thereof' are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

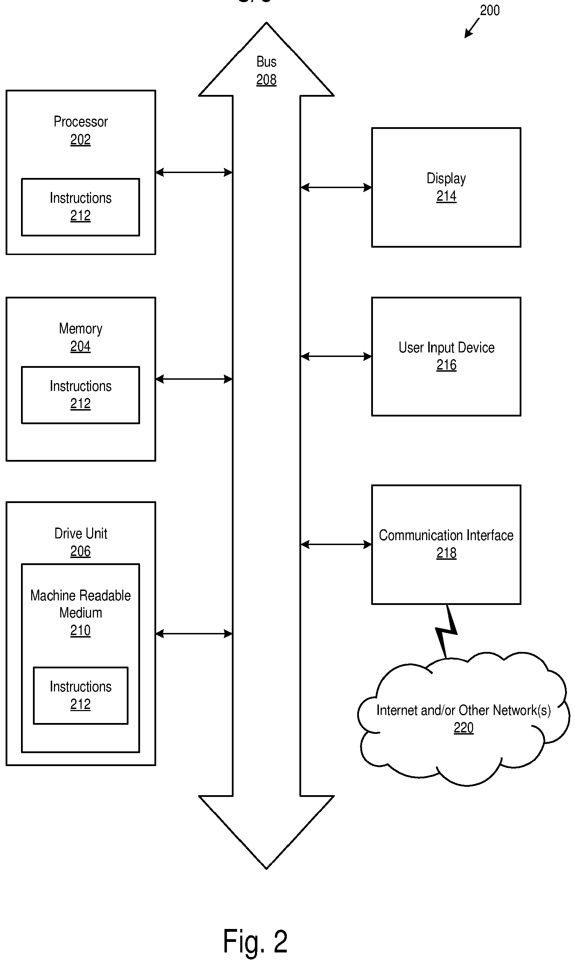

The exchange computer system 100 may be implemented with one or more mainframe, desktop or other computers, such as the example computer 200 described below with respect to Figure 2. A user database 102 may be provided which includes information identifying traders and other users of exchange computer system 100, such as account numbers or identifiers, usernames and passwords. An account data module 104 may be provided which may process account information that may be used during trades.

A match engine module 106 may be included to match bid and offer prices and may be implemented with software that executes one or more algorithms for matching bids and offers. A trade database 108 may be included to store information identifying trades and descriptions of trades. In particular, a trade database may store information identifying the time that a trade took place and the contract price. An order book module 110 may be included to compute or otherwise determine current bid and offer prices, e.g., in a continuous auction market, or also operate as an order accumulation buffer for a batch auction market.

A market data module 112 may be included to collect market data and prepare the data for transmission to users.

A risk management module 134 may be included to compute and determine a user's risk utilization in relation to the user's defined risk thresholds. The risk management module 134 may also be configured to determine risk assessments or exposure levels in connection with positions held by a market participant.

The risk management module 134 may be configured to administer, manage or maintain one or more margining mechanisms implemented by the exchange computer system 100. Such administration, management or maintenance may include managing a number of database records reflective of margin accounts of the market participants. In some implementations, the risk management module 134 implements one or more aspects of the disclosed implementations, including, for instance, principal component analysis (PCA) based margining, in connection with interest rate swap (IRS) portfolios, as described below.

An order processing module 136 may be included to decompose delta-based, spread instrument, bulk and other types of composite orders for processing by the order book module 110 and/or the match engine module 106. The order processing module 136 may also be used to implement one or more procedures related to clearing an order.

A message management module 140 may be included to, among other things, receive, and extract orders from, electronic messages as is indicated with one or more aspects of the disclosed implementations.

A settlement module 142 (or settlement processor or other payment processor) may be included to provide one or more functions related to settling or otherwise administering transactions cleared by the exchange. Settlement module 142 of the exchange computer system 100 may implement one or more settlement price determination techniques. Settlement-related functions need not be limited to actions or events occurring at the end of a contract term. For instance, in some implementations, settlement-related functions may include or involve daily or other mark to market settlements for margining purposes. In some cases, the settlement module 142 may be configured to communicate with the trade database 108 (or the memory(ies) on which the trade database 108 is stored) and/or to determine a payment amount based on a spot price, the price of the futures contract or other financial instrument, or other price data, at various times. The determination may be made at one or more points in time during the term of the financial instrument in connection with a margining mechanism. For example, the settlement module 142 may be used to determine a mark to market amount on a daily basis during the term of the financial instrument. Such determinations may also be made on a settlement date for the financial instrument for the purposes of final settlement.

In some implementations, the settlement module 142 may be integrated to any desired extent with one or more of the other modules or processors of the exchange computer system 100. For example, the settlement module 142 and the risk management module 134 may be integrated to any desired extent. In some cases, one or more margining procedures or other aspects of the margining mechanism(s) may be implemented by the settlement module 142.

It should be appreciated that concurrent processing limits may be defined by or imposed separately or in combination, as was described above, on one or more of the trading system components, including the user database 102, the account data module 104, the match engine module 106, the trade database 108, the order book module 110, the market data module 112, the risk management module 134, the order processing module 136, the message management module 140, the settlement module 142, or other component of the exchange computer system 100.

In various implementations, the message management module 140, as coupled with the order book module 110, may be configured for receiving a plurality of electronic request messages, each of the plurality of messages having an associated action to be executed within a designated period of time having a beginning time and an ending time, wherein at least one electronic request message of the plurality of electronic request messages comprises data representative of a particular time between the beginning and end of the period of time at which the action associated with the at least one electronic request message is to be executed. The exchange computer system 100 may then be further configured to execute the action associated with the at least one temporally specific message at the particular time.

The message management module 140 may define a point of ingress into the exchange computer system 100 where messages are ordered and considered to be received by the system. This may be considered a point of determinism in the exchange computer system 100 that defines the earliest point where the system can ascribe an order of receipt to arriving messages. The point of determinism may or may not be at or near the demarcation point between the exchange computer system 100 and a public/internet network infrastructure.

The message management module 140 may be configured to send outgoing messages and thus may include a publication queue for management and ordering of outgoing messages. The outgoing messages may be used to implement market data feeds using outgoing messages reporting events and/or direct messaging using messages reporting data directed to specific participants

Figure 1A provides additional details for the message management module 140.

As will be described, the disclosed obfuscation delay system may be implemented as part of the message management module 140 and/or order processing module 136. However, it will be appreciated that the disclosed mechanisms may be implemented at any logical and/or physical point(s), or combinations thereof, at which delays may be added, e.g., by adding processing cycles, holding messages, buffering data, or other delay actions, including one or more gateway devices, modems, the computers or terminals of one or more market participants, etc.

One skilled in the art will appreciate that one or more modules described herein may be implemented using, among other things, a tangible computer-readable medium comprising computer-executable instructions (e.g., executable software code). Alternatively, modules may be implemented as software code, firmware code, specifically configured hardware or processors, and/or a combination of the aforementioned. For example the modules may be embodied as part of an exchange 100 for financial instruments. It should be appreciated the disclosed implementations may be implemented as a different or separate module of the exchange computer system 100, or a separate computer system coupled with the exchange computer system 100 so as to have access to margin account record, pricing, and/or other data.

As described above, the disclosed implementations may be implemented as a centrally accessible system or as a distributed system, e.g., where the disclosed functions are performed by a cloud-based deployment, where some of the disclosed functions are performed by the computer systems of the market participants and/or via hardware located at multiple distinct physical locations. In some distributed implementations, obfuscation delays may be used to synchronize reports of events to prevent dissemination of information in a particular region before dissemination of that same information in other regions.

The trading network environment shown in Figure 1 includes exemplary computer devices 114, 116, 118, 120 and 122 which depict different exemplary methods or media by which a computer device may be coupled with the exchange computer system 100 or by which a user may communicate, e.g., send and receive, trade or other information therewith. It should be appreciated that the types of computer devices deployed by traders and the methods and media by which they communicate with the exchange computer system 100 is implementation dependent and may vary and that not all of the depicted computer devices and/or means/media of communication may be used and that other computer devices and/or means/media of communications, now available or later developed may be used. Each computer device, which may comprise a computer 200 described in more detail below with respect to Figure 2, may include a central processor, specifically configured or otherwise, that controls the overall operation of the computer and a system bus that connects the central processor to one or more conventional components, such as a network card or modem. Each computer device may also include a variety of interface units and drives for reading and writing data or files and communicating with other computer devices and with the exchange computer system 100. Depending on the type of computer device, a user can interact with the computer with a keyboard, pointing device, microphone, pen device or other input device now available or later developed.

An exemplary computer device 114 is shown directly connected to exchange computer system 100, such as via a T1 line, a common local area network (LAN) or other wired and/or wireless medium for connecting computer devices, such as the network 220 shown in Figure 2 and described below with respect thereto. The exemplary computer device 114 is further shown connected to a radio 132. The user of radio 132, which may include a cellular telephone, smart phone, or other wireless proprietary and/or non-proprietary device, may be a trader or exchange employee. The radio user may transmit orders or other information to the exemplary computer device 114 or a user thereof. The user of the exemplary computer device 114, or the exemplary computer device 114 alone and/or autonomously, may then transmit the trade or other information to the exchange computer system 100.

Exemplary computer devices 116 and 118 are coupled with a local area network ("LAN") 124 which may be configured in one or more of the well-known LAN topologies, e.g., star, daisy chain, etc., and may use a variety of different protocols, such as Ethernet, TCP/IP, etc. The exemplary computer devices 116 and 118 may communicate with each other and with other computer and other devices which are coupled with the LAN 124. Computer and other devices may be coupled with the LAN 124 via twisted pair wires, coaxial cable, fiber optics or other wired or wireless media. As shown in Figure 1, an exemplary wireless personal digital assistant device ("PDA") 122, such as a mobile telephone, tablet based compute device, or other wireless device, may communicate with the LAN 124 and/or the Internet 126 via radio waves, such as via WiFi, Bluetooth and/or a cellular telephone based data communications protocol. PDA 122 may also communicate with exchange computer system 100 via a conventional wireless hub 128.

Figure 1 also shows the LAN 124 coupled with a wide area network ("WAN") 126 which may be comprised of one or more public or private wired or wireless networks. In one implementation, the WAN 126 includes the Internet 126. The LAN 124 may include a router to connect LAN 124 to the Internet 126. Exemplary computer device 120 is shown coupled directly to the Internet 126, such as via a modem, DSL line, satellite dish or any other device for connecting a computer device to the Internet 126 via a service provider therefore as is known. LAN 124 and/or WAN 126 may be the same as the network 220 shown in Figure 2 and described below with respect thereto.

Users of the exchange computer system 100 may include one or more market makers 130 which may maintain a market by providing constant bid and offer prices for a derivative or security to the exchange computer system 100, such as via one of the exemplary computer devices depicted. The exchange computer system 100 may also exchange information with other match or trade engines, such as trade engine 138. One skilled in the art will appreciate that numerous additional computers and systems may be coupled to exchange computer system 100. Such computers and systems may include clearing, regulatory and fee systems.

The operations of computer devices and systems shown in Figure 1 may be controlled by computer-executable instructions stored on a non-transitory computer-readable medium. For example, the exemplary computer device 116 may store computer-executable instructions for receiving order information from a user, transmitting that order information to exchange computer system 100 in electronic messages, extracting the order information from the electronic messages, executing actions relating to the messages, and/or calculating values from characteristics of the extracted order to facilitate matching orders and executing trades. In another example, the exemplary computer device 118 may include computer-executable instructions for receiving market data from exchange computer system 100 and displaying that information to a user.

Numerous additional servers, computers, handheld devices, personal digital assistants, telephones and other devices may also be connected to exchange computer system 100. Moreover, one skilled in the art will appreciate that the topology shown in Figure 1 is merely an example and that the components shown in Figure 1 may include other components not shown and be connected by numerous alternative topologies.

As shown in Figure 1, the exchange computer system 100 further includes a message management module 140 which may implement, in conjunction with the market data module 112, the disclosed mechanisms for managing electronic messages containing financial data sent between an exchange and a plurality of market participants, or vice versa.

Figure 1A illustrates an implementation of market order message management as implemented using the message management module 140 and order book module 110 of the exchange computer system 100. The message management module 140 may include message ingress 190 for incoming messages and message egress 195 for outgoing messages. As such, an incoming message 10 may be received from a market participant at the exchange computer system 100 by a message receipt module 144 of the message management module 140. The message receipt module 144 processes the incoming message 10 by interpreting the content of the message based on the message transmit protocol, such as the transmission control protocol ("TCP"), to provide the content of the incoming message 10 for further processing by the exchange computer system. The message egress 195 may include a publication queue 196 for sequencing of outgoing message 20 sending. The publication queue 196 may be used to implement obfuscation delays as discussed herein. The message egress 195 may include a message transmission module 197 for communication of outgoing messages 20 upon exit from the publication queue 196. In some cases, the message egress may be implemented as in conjunction with or separately by the market data module 112 and/or the order processing module 136.

Further processing may be performed by the order extraction module 146. The order extraction module 146 may be configured to detect, from the content of the message 10 provided by the message receipt module 144, characteristics of an order for a transaction to be undertaken in an electronic marketplace. For example, the order extraction module 146 may identify and extract order content such as a price, product, volume, and associated market participant for an order. The order extraction module 146 may also identify and extract data indicating an action to be executed by the exchange computer system 100 with respect to the extracted order. The order extraction module may also identify and extract other order information and other actions associated with the extracted order. All extracted order characteristics, other information, and associated actions extracted from a message for an order may be collectively considered an order as described and referenced herein.

Order or message characteristics may include, for example, the state of the system after a message is received, arrival time (e.g., the time a message arrives at the MSG or Market Segment Gateway), message type (e.g., new, modify, cancel), and the number of matches generated by a message. Order or message characteristics may also include market participant side (e.g., buy or sell) or time in force (e.g., a good until end of day order that is good for the full trading day, a good until canceled ordered that rests on the order book until matched, or a fill or kill order that is canceled if not filled immediately).

The order may be communicated from the order extraction module 146 to an order processing module 136. The order processing module 136 may be configured to interpret the communicated order, and manage the order characteristics, other information, and associated actions as they are processed through an order book module 110 and eventually transacted on an electronic market. For example, the order processing module 136 may store the order characteristics and other content and execute the associated actions. In an implementation, the order processing module may execute an associated action of placing the order into an order book for an electronic trading system managed by the order book module 110. In an implementation, placing an order into an order book and/or into an electronic trading system may be considered a primary action for an order. The order processing module 136 may be configured in various arrangements, and may be configured as part of the order book module 110, part of the message management module 140, or as an independent functioning module.

The implementations described herein utilize trade related electronic messages such as mass quote messages, individual order messages, modification messages, cancelation messages, etc., so as to enact trading activity in an electronic market. The trading entity and/or market participant may have one or multiple trading terminals associated with the session. Furthermore, the financial instruments may be financial derivative products. Derivative products may include futures contracts, options on futures contracts, futures contracts that are functions of or related to other futures contracts, swaps, swaptions, or other financial instruments that have their price related to or derived from an underlying product, security, commodity, equity, index, or interest rate product. In one implementation, the orders are for options contracts that belong to a common option class. Orders may also be for baskets, quadrants, other combinations of financial instruments, etc. The option contracts may have a plurality of strike prices and/or comprise put and call contracts. A mass quote message may be received at an exchange. As used herein, an exchange 100 includes a place or system that receives and/or executes orders.

Referring to Figure 2, an illustrative implementation of a general computer system 200 is shown. The computer system 200 can include a set of instructions that can be executed to cause the computer system 200 to perform any one or more of the methods or computer based functions disclosed herein. The computer system 200 may operate as a standalone device or may be connected, e.g., using a network, to other computer systems or peripheral devices. Any of the components discussed above, such as the processor 202, may be a computer system 200 or a component in the computer system 200. The computer system 200 may be specifically configured to implement a match engine, margin processing, payment or clearing function on behalf of an exchange, such as the Chicago Mercantile Exchange, of which the disclosed implementations are a component thereof.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 200 can be implemented using electronic devices that provide voice, video or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Figure 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 204 includes a cache or random access memory for the processor 202. In alternative implementations, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firmware, microcode and the like, operating alone or in combination. Likewise, processing strategies may include multiprocessing, multitasking, parallel processing and the like.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function can be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks", and a hierarchy of reconfigurable interconnects that allow the blocks to be "wired together", somewhat like many (changeable) logic gates that can be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control or any other device operative to interact with the system 200.

In a particular implementation, as depicted in Figure 2, the computer system 200 may also include a disk or optical drive unit 206. The disk drive unit 206 may include a computer-readable medium 210 in which one or more sets of instructions 212, e.g., software, can be embedded. Further, the instructions 212 may embody one or more of the methods or logic as described herein. In a particular implementation, the instructions 212 may reside completely, or at least partially, within the memory 204 and/or within the processor 202 during execution by the computer system 200. The memory 204 and the processor 202 also may include computer-readable media as discussed above.

The present disclosure contemplates a computer-readable medium that includes instructions 212 or receives and executes instructions 212 responsive to a propagated signal, so that a device connected to a network 220 can communicate voice, video, audio, images or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly as discussed below. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Implementations of the subject matter and the functional operations described in this specification can be implemented in digital electronic circuitry, or in computer software, firmware, or hardware, including the structures disclosed in this specification and their structural equivalents, or in combinations of one or more of them. Implementations of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary implementation, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated or otherwise specifically configured hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the techniques and architectures are not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random access memory or both. The essential elements of a computer are a processor for performing instructions and one or more memory devices for storing instructions and data. The instructions govern the operation of the processor thereby transforming the processor into a special purpose device. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and optical media (CD-ROM, DVD-ROM, Blu-Ray, or other optical media). The processor and the memory can be supplemented by, or incorporated in, special purpose logic circuitry.

To provide for interaction with a user, implementations of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well. Feedback provided to the user can be any form of sensory feedback, e.g., visual feedback, auditory feedback, or tactile feedback. Input from the user can be received in any form, including acoustic, speech, or tactile input.

Implementations of the subject matter described in this specification can be implemented in a computing system that includes a back end component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The computing system may include serverless deployments using scalable cloud-based systems. The capacity of the serverless system may be dynamically scaled according to function calls and thus the amount of non-transient hardware utilized/requisitioned to support the system may be responsive to traffic and or otherwise transient demand.

It should be appreciated that the disclosed implementations may be applicable to other types of messages depending upon the implementation. Further, the messages may comprise one or more data packets, datagrams or other collection of data formatted, arranged configured and/or packaged in a particular one or more protocols, e.g., the FIX protocol, TCP/IP, Ethernet, etc., suitable for transmission via a network 214 as was described, such as the message format and/or protocols described in U.S. Patent No. 7,831,491 and U.S. Patent Publication No. 2005/0096999 A1, both of which are incorporated by reference herein in their entireties and relied upon. Further, the disclosed message management system may be implemented using an open message standard implementation, such as FIX, FIX Binary, FIX/FAST, or by an exchange-provided API.

An exchange provides one or more markets for the purchase and sale of various types of products including financial instruments such as stocks, bonds, futures contracts, options, currency, cash, and other similar instruments. Agricultural products and commodities are also examples of products traded on such exchanges. A futures contract is a product that is a contract for the future delivery of another financial instrument such as a quantity of grains, metals, oils, bonds, currency, or cash. Generally, each exchange establishes a specification for each market provided thereby that defines at least the product traded in the market, minimum quantities that must be traded, and minimum changes in price (e.g., tick size). For some types of products (e.g., futures or options), the specification further defines a quantity of the underlying product represented by one unit (or lot) of the product, and delivery and expiration dates. As will be described, the exchange may further define the matching algorithm, or rules, by which incoming orders will be matched/allocated to resting orders.

Market participants, e.g., traders, use software to send orders or messages to the trading platform. The order identifies the product, the quantity of the product the trader wishes to trade, a price at which the trader wishes to trade the product, and a direction of the order (i.e., whether the order is a bid, i.e., an offer to buy, or an ask, i.e., an offer to sell). It will be appreciated that there may be other order types or messages that traders can send including requests to modify or cancel a previously submitted order.

The disclosed implementations recognize that electronic messages such as incoming messages from market participants, i.e., "outright" messages, e.g., trade order messages, etc., are sent from client devices associated with market participants, or their representatives, to an electronic trading or market system. For example, a market participant may submit an electronic message to the electronic trading system that includes an associated specific action to be undertaken by the electronic trading system, such as entering a new trade order into the market or modifying an existing order in the market.

Electronic trading of financial instruments, such as futures contracts, is conducted by market participants sending orders, such as to buy or sell one or more futures contracts, in electronic form to the exchange. These electronically submitted orders to buy and sell are then matched, if possible, by the exchange, i.e., by the exchange's matching engine, to execute a trade. Outstanding (unmatched, wholly unsatisfied/unfilled or partially satisfied/filled) orders are maintained in one or more data structures or databases referred to as "order books," such orders being referred to as "resting," and made visible, i.e., their availability for trading is advertised, to the market participants through electronic notifications/broadcasts, referred to as market data feeds. An order book is typically maintained for each product, e.g., instrument, traded on the electronic trading system and generally defines or otherwise represents the state of the market for that product, i.e., the current prices at which the market participants are willing buy or sell that product. As such, as used herein, an order book for a product may also be referred to as a market for that product.

In the exemplary implementations, all transactions for a particular market may be ultimately received at the electronic trading system via one or more points of entry, e.g., one or more communications interfaces, at which the disclosed implementations apply determinism, which as described may be at the point where matching occurs, e.g., at each match engine (where there may be multiple match engines, each for a given product/market, or moved away from the point where matching occurs and closer to the point where the electronic trading system first becomes "aware" of the incoming transaction, such as the point where transaction messages, e.g., orders, ingress the electronic trading system. Generally, the terms "determinism" or "transactional determinism" may refer to the processing, or the appearance thereof, of orders in accordance with defined business rules. Accordingly, as used herein, the point of determinism may be the point at which the electronic trading system ascribes an ordering to incoming transactions/orders relative to other incoming transactions/orders such that the ordering may be factored into the subsequent processing, e.g., matching, of those transactions/orders as will be described. For more detail on deterministic operation in a trading system, see U.S. patent application Ser. No. 14/074,675, filed on Nov. 7, 2013, published as U.S. patent application Publication Ser. No. U.S. Patent Publication No. 2015/0127516, entitled "Transactionally Deterministic High Speed Financial Exchange Having Improved, Efficiency, Communication, Customization, Performance, Access, Trading Opportunities, Credit Controls, And Fault Tolerance", the entirety of which is incorporated by reference herein and relied upon.

In various implementations, the disclosed system may include a Market Segment Gateway ("MSG") that is the point of ingress/entry and/or egress/departure for all transactions, i.e., the network traffic/packets containing the data therefore, specific to a single market at which the order of receipt of those transactions may be ascribed. An MSG or Market Segment Gateway may be utilized for the purpose of deterministic operation of the market. The electronic trading system may include multiple MSGs, one for each market/product implemented thereby.

For example, a participant may send a request for a new transaction, e.g., a request for a new order, to the MSG. The MSG extracts or decodes the request message and determines the characteristics of the request message.

The MSG may include, or otherwise be coupled with, a buffer, cache, memory, database, content addressable memory, data store or other data storage mechanism, or combinations thereof, which stores data indicative of the characteristics of the request message. The request operation is passed to the transaction processing system, e.g., the match engine.

Upon receipt of an incoming order to trade in a particular financial instrument, whether for a single-component financial instrument, e.g., a single futures contract, or for a multiple-component financial instrument, e.g., a combination contract such as a spread contract, a match engine, as will be described in detail below, will attempt to identify a previously received but unsatisfied order counter thereto, i.e., for the opposite transaction (buy or sell) in the same financial instrument at the same or better price (but not necessarily for the same quantity unless, for example, either order specifies a condition that it must be entirely filled or not at all).

Previously received but unsatisfied orders, i.e., orders which either did not match with a counter order when they were received or their quantity was only partially satisfied, referred to as a partial fill, are maintained by the electronic trading system in an order book database/data structure to await the subsequent arrival of matching orders or the occurrence of other conditions which may cause the order to be modified or otherwise removed from the order book.

If the match engine identifies one or more suitable previously received but unsatisfied counter orders, they, and the incoming order, are matched to execute a trade there between to at least partially satisfy the quantities of one or both of the incoming order or the identified orders. If there remains any residual unsatisfied quantity of the identified one or more orders, those orders are left on the order book with their remaining quantity to await a subsequent suitable counter order, i.e., to rest. If the match engine does not identify a suitable previously received but unsatisfied counter order, or the one or more identified suitable previously received but unsatisfied counter orders are for a lesser quantity than the incoming order, the incoming order is placed on the order book, referred to as "resting", with original or remaining unsatisfied quantity, to await a subsequently received suitable order counter thereto. The match engine then generates match event data, as was described above, reflecting the result of this matching process. Other components of the electronic trading system, as will be described, then generate the respective order acknowledgment and market data messages and transmit those messages to the market participants.

Matching, which is a function typically performed by the exchange, is a process, for a given order which specifies a desire to buy or sell a quantity of a particular instrument at a particular price, of seeking/identifying one or more wholly or partially, with respect to quantity, satisfying counter orders thereto, e.g., a sell counter to an order to buy, or vice versa, for the same instrument at the same, or sometimes better, price (but not necessarily the same quantity), which are then paired for execution to complete a trade between the respective market participants (via the exchange) and at least partially satisfy the desired quantity of one or both of the order and/or the counter order, with any residual unsatisfied quantity left to await another suitable counter order, referred to as "resting." A match event may occur, for example, when an aggressing order matches with a resting order. In one implementation, two orders match because one order includes instructions for or specifies buying a quantity of a particular instrument at a particular price, and the other order includes instructions for or specifies selling a (different or same) quantity of the instrument at a same or better price.

The exchange computer system, as will be described below, monitors incoming orders received thereby and attempts to identify, i.e., match or allocate, as will be described in more detail below, one or more previously received, but not yet matched, orders, i.e., limit orders to buy or sell a given quantity at a given price, referred to as "resting" orders, stored in an order book database, wherein each identified order is contra to the incoming order and has a favorable price relative to the incoming order. An incoming order may be an "aggressor" order, i.e., a market order to sell a given quantity at whatever may be the current resting bid order price(s) or a market order to buy a given quantity at whatever may be the current resting ask order price(s). An incoming order may be a "market making" order, i.e., a market order to buy or sell at a price for which there are currently no resting orders. In particular, if the incoming order is a bid, i.e., an offer to buy, then the identified order(s) will be an ask, i.e., an offer to sell, at a price that is identical to or higher than the bid price. Similarly, if the incoming order is an ask, i.e., an offer to sell, the identified order(s) will be a bid, i.e., an offer to buy, at a price that is identical to or lower than the offer price.

Stop orders also rest on, or are maintained in, an order book to monitor for a trade at the stop price, which triggers an attempted trade at the limit price. In one implementation, a triggered limit price for a stop order may be treated as an incoming order in some of the methods described herein.

Upon identification (matching) of a contra order(s), a minimum of the quantities associated with the identified order and the incoming order is matched and that quantity of each of the identified and incoming orders become two halves of a matched trade that is sent to a clearinghouse. The exchange computer system considers each identified order in this manner until either all of the identified orders have been considered or all of the quantity associated with the incoming order has been matched, i.e., the order has been filled. If any quantity of the incoming order remains, an entry may be created in the order book database and information regarding the incoming order is recorded therein, i.e., a resting order is placed on the order book for the remaining quantity to await a subsequent incoming order counter thereto.

Traders access the markets on a trading platform using trading software that receives and displays at least a portion of the order book for a market, i.e., at least a portion of the currently resting orders, enables a trader to provide parameters for an order for the product traded in the market, and transmits the order to the exchange computer system. The trading software typically includes a graphical user interface to display at least a price and quantity of some of the entries in the order book associated with the market. The number of entries of the order book displayed is generally preconfigured by the trading software, limited by the exchange computer system, or customized by the user. Some graphical user interfaces display order books of multiple markets of one or more trading platforms. The trader may be an individual who trades on his/her behalf, a broker trading on behalf of another person or entity, a group, or an entity. Furthermore, the trader may be a system that automatically generates and submits orders.

If the exchange computer system identifies that an incoming market order may be filled by a combination of multiple resting orders, e.g., the resting order at the best price only partially fills the incoming order, the exchange computer system may allocate the remaining quantity of the incoming, i.e., that which was not filled by the resting order at the best price, among such identified orders in accordance with prioritization and allocation rules/algorithms, referred to as "allocation algorithms" or "matching algorithms," as, for example, may be defined in the specification of the particular financial product or defined by the exchange for multiple financial products. Similarly, if the exchange computer system identifies multiple orders contra to the incoming limit order and that have an identical price which is favorable to the price of the incoming order, i.e., the price is equal to or better, e.g., lower if the incoming order is a buy (or instruction to purchase) or higher if the incoming order is a sell (or instruction to relinquish), than the price of the incoming order, the exchange computer system may allocate the quantity of the incoming order among such identified orders in accordance with the matching algorithms as, for example, may be defined in the specification of the particular financial product or defined by the exchange for multiple financial products.

As was noted above, an exchange must respond to inputs, such as trader orders, cancellation, etc., in a manner as expected by the market participants, such as based on market data, e.g., prices, available counter-orders, etc., to provide an expected level of certainty that transactions will occur in a consistent and predictable manner and without unknown or unascertainable risks. Accordingly, the method by which incoming orders are matched with resting orders must be defined so that market participants have an expectation of what the result will be when they place an order or have resting orders and incoming order is received, even if the expected result is, in fact, at least partially unpredictable due to some component of the process being random or arbitrary or due to market participants having imperfect or less than all information, e.g., unknown position of an order in an order book. Typically, the exchange defines the matching/allocation algorithm that will be used for a particular financial product, with or without input from the market participants. Once defined for a particular product, the matching/allocation algorithm is typically not altered, except in limited circumstance, such as to correct errors or improve operation, so as not to disrupt trader expectations. It will be appreciated that different products offered by a particular exchange may use different matching algorithms.

For example, a first-in/first-out (FIFO) matching algorithm, also referred to as a "Price Time" algorithm, considers each identified order sequentially in accordance with when the identified order was received. The quantity of the incoming order is matched to the quantity of the identified order at the best price received earliest, then quantities of the next earliest best price orders, and so on until the quantity of the incoming order is exhausted. Some product specifications define the use of a pro-rata matching algorithm, wherein a quantity of an incoming order is allocated to each of plurality of identified orders proportionally. Some exchange computer systems provide a priority to certain standing orders in particular markets. An example of such an order is the first order that improves a price (i.e., improves the market) for the product during a trading session. To be given priority, the trading platform may require that the quantity associated with the order is at least a minimum quantity. Further, some exchange computer systems cap the quantity of an incoming order that is allocated to a standing order on the basis of a priority for certain markets. In addition, some exchange computer systems may give a preference to orders submitted by a trader who is designated as a market maker for the product. Other exchange computer systems may use other criteria to determine whether orders submitted by a particular trader are given a preference. Typically, when the exchange computer system allocates a quantity of an incoming order to a plurality of identified orders at the same price, the trading host allocates a quantity of the incoming order to any orders that have been given priority. The exchange computer system thereafter allocates any remaining quantity of the incoming order to orders submitted by traders designated to have a preference, and then allocates any still remaining quantity of the incoming order using the FIFO or pro-rata algorithms. Pro-rata algorithms used in some markets may require that an allocation provided to a particular order in accordance with the pro-rata algorithm must meet at least a minimum allocation quantity. Any orders that do not meet or exceed the minimum allocation quantity are allocated to on a FIFO basis after the pro-rata allocation (if any quantity of the incoming order remains). More information regarding order allocation may be found in U.S. Pat. No. 7,853,499, the entirety of which is incorporated by reference herein and relied upon.

Other examples of matching algorithms which may be defined for allocation of orders of a particular financial product include:

    Price Explicit Time
    Order Level Pro Rata
    Order Level Priority Pro Rata
    Preference Price Explicit Time
    Preference Order Level Pro Rata
    Preference Order Level Priority Pro Rata

Threshold Pro-Rata
Priority Threshold Pro-Rata
Preference Threshold Pro-Rata
Priority Preference Threshold Pro-Rata
Split Price-Time Pro-Rata

For example, the Price Explicit Time trading policy is based on the basic Price Time trading policy with Explicit Orders having priority over Implied Orders at the same price level. The order of traded volume allocation at a single price level may therefore be:

Explicit order with oldest timestamp first. Followed by
Any remaining explicit orders in timestamp sequence (First In, First Out-FIFO) next. Followed by
Implied order with oldest timestamp next. Followed by
Any remaining implied orders in timestamp sequence (FIFO).

In Order Level Pro Rata, also referred to as Price Pro Rata, priority is given to orders at the best price (highest for a bid, lowest for an offer). If there are several orders at this best price, equal priority is given to every order at this price and incoming business is divided among these orders in proportion to their order size. The Pro Rata sequence of events is:

1. Extract all potential matching orders at best price from the order book into a list.
2. Sort the list by order size, largest order size first. If equal order sizes, oldest timestamp first. This is the matching list.
3. Find the 'Matching order size, which is the total size of all the orders in the matching list.
4. Find the 'tradable volume', which is the smallest of the matching volume and the volume left to trade on the incoming order.
5. Allocate volume to each order in the matching list in turn, starting at the beginning of the list. If all the tradable volume gets used up, orders near the end of the list may not get allocation.
6. The amount of volume to allocate to each order is given by the formula:

(Order volume/Matching volume)*Tradable volume

The result is rounded down (for example, 21.99999999 becomes 21) unless the result is less than 1, when it becomes 1.
7. If tradable volume remains when the last order in the list had been allocated to, return to step 3.
Note: The matching list is not re-sorted, even though the volume has changed. The order which originally had the largest volume is still at the beginning of the list.
8. If there is still volume left to trade on the incoming order, repeat the entire algorithm at the next price level.
Order Level Priority Pro Rata, also referred to as Threshold Pro Rata, is similar to the Price (or 'Vanilla') Pro Rata algorithm but has a volume threshold defined. Any pro rata allocation below the threshold will be rounded down to 0. The initial pass of volume allocation is carried out in using pro rata; the second pass of volume allocation is carried out using Price Explicit Time. The Threshold Pro Rata sequence of events is:

1. Extract all potential matching orders at best price from the order book into a list.
2. Sort the list by explicit time priority, oldest timestamp first. This is the matching list.
3. Find the 'Matching volume', which is the total volume of all the orders in the matching list.
4. Find the 'tradable volume', which is the smallest of the matching volume and the volume left to trade on the incoming order.
5. Allocate volume to each order in the matching list in turn, starting at the beginning of the list.
6. The amount of volume to allocate to each order is given by the formula:

(Order volume/Matching volume)*Tradable volume

The result is rounded down to the nearest lot (for example, 21.99999999 becomes 21) unless the result is less than the defined threshold in which case it is rounded down to 0.
7. If tradable volume remains when the last order in the list had been allocated to, the remaining volume is allocated in time priority to the matching list.
8. If there is still volume left to trade on the incoming order, repeat the entire algorithm at the next price level.
In the Split Price Time Pro-Rata algorithms, a Price Time Percentage parameter is defined. This percentage of the matching volume at each price is allocated by the Price Explicit Time algorithm and the remainder is allocated by the Threshold Pro-Rata algorithm. There are four variants of this algorithm, with and without Priority and/or Preference. The Price Time Percentage parameter is an integer between 1 and 99. (A percentage of zero would be equivalent to using the respective existing Threshold Pro-Rata algorithm, and a percentage of 100 would be equivalent to using the respective existing Price Time algorithm). The Price Time Volume will be the residual incoming volume, after any priority and/or Preference allocation has been made, multiplied by the Price Time Percentage. Fractional parts will be rounded up, so the Price Time Volume will always be at least 1 lot and may be the entire incoming volume. The Price Time Volume is allocated to resting orders in strict time priority. Any remaining incoming volume after the Price Time Volume has been allocated will be allocated according to the respective Threshold Pro-Rata algorithm. The sequence of allocation, at each price level, is therefore:

1. Priority order, if applicable
2. Preference allocation, if applicable
3. Price Time allocation of the configured percentage of incoming volume
4. Threshold Pro-Rata allocation of any remaining incoming volume
5. Final allocation of any leftover lots in time sequence.

Any resting order may receive multiple allocations from the various stages of the algorithm.

It will be appreciated that there may be other allocation algorithms, including combinations of algorithms, now available or later developed, which may be utilized with the disclosed implementations, and all such algorithms are contemplated herein. In one implementation, the disclosed implementations may be used in any combination or sequence with the allocation algorithms described herein.

With respect to incoming orders, some traders, such as automated and/or algorithmic traders, attempt to respond to market events, such as to capitalize upon a mispriced resting order or other market inefficiency, as quickly as possible. This may result in penalizing the trader who makes an errant trade, or whose underlying trading motivations have changed, and who cannot otherwise modify or cancel their order faster than other traders can submit trades there against. It may considered that an electronic trading system that rewards the trader who submits their order first creates an incentive to either invest substantial capital in faster trading systems, participate in the market substantially to capitalize on opportunities (aggressor side/lower risk trading) as opposed to creating new opportunities (market making/higher risk trading), modify existing systems to streamline business logic at the cost of trade quality, or reduce one's activities and exposure in the market. The result may be a lesser quality market and/or reduced transaction volume, and corresponding thereto, reduced fees to the exchange.

With respect to resting orders, allocation/matching suitable resting orders to match against an incoming order can be performed, as described above, in many different ways. Generally, it will be appreciated that allocation/matching algorithms are only needed when the incoming order quantity is less than the total quantity of the suitable resting orders as, only in this situation, is it necessary to decide which resting order(s) will not be fully satisfied, which trader(s) will not get their orders filled. It can be seen from the above descriptions of the matching/allocation algorithms, that they fall generally into three categories: time priority/first-in-first-out ("FIFO"), pro rata, or a hybrid of FIFO and pro rata.

As described above, matching systems apply a single algorithm, or combined algorithm, to all of the orders received for a particular financial product to dictate how the entire quantity of the incoming order is to be matched/allocated. In contrast, the disclosed implementations may apply different matching algorithms, singular or combined, to different orders, as will be described, recognizing that the allocation algorithms used by the trading host for a particular market may, for example, affect the liquidity of the market. Specifically, some allocation algorithms may encourage traders to submit more orders, where each order is relatively small, while other allocation algorithms encourage traders to submit larger orders. Other allocation algorithms may encourage a trader to use an electronic trading system that can monitor market activity and submit orders on behalf of the trader very quickly and without intervention. As markets and technologies available to traders evolve, the allocation algorithms used by trading hosts must also evolve accordingly to enhance liquidity and price discovery in markets, while maintaining a fair and equitable market.

FIFO generally rewards the first trader to place an order at a particular price and maintains this reward indefinitely. So if a trader is the first to place an order at price X, no matter how long that order rests and no matter how many orders may follow at the same price, as soon as a suitable incoming order is received, that first trader will be matched first. This "first mover" system may commit other traders to positions in the queue after the first move traders. Furthermore, while it may be beneficial to give priority to a trader who is first to place an order at a given price because that trader is, in effect, taking a risk, the longer that the trader's order rests, the less beneficial it may be. For instance, it could deter other traders from adding liquidity to the marketplace at that price because they know the first mover (and potentially others) already occupies the front of the queue.

With a pro rata allocation, incoming orders are effectively split among suitable resting orders. This provides a sense of fairness in that everyone may get some of their order filled. However, a trader who took a risk by being first to place an order (a "market turning" order) at a price may end up having to share an incoming order with a much later submitted order. Furthermore, as a pro rata allocation distributes the incoming order according to a proportion based on the resting order quantities, traders may place orders for large quantities, which they are willing to trade but may not necessarily want to trade, in order to increase the proportion of an incoming order that they will receive. This results in an escalation of quantities on the order book and exposes a trader to a risk that someone may trade against one of these orders and subject the trader to a larger trade than they intended. In the typical case, once an incoming order is allocated against these large resting orders, the traders subsequently cancel the remaining resting quantity which may frustrate other traders. Accordingly, as FIFO and pro rata both have benefits and problems, exchanges may try to use hybrid allocation/matching algorithms which attempt to balance these benefits and problems by combining FIFO and pro rata in some manner. However, hybrid systems define conditions or fixed rules to determine when FIFO should be used and when pro rata should be used. For example, a fixed percentage of an incoming order may be allocated using a FIFO mechanism with the remainder being allocated pro rata.

Traders trading on an exchange including, for example, exchange computer system 100, often desire to trade multiple financial instruments in combination. Each component of the combination may be called a leg. Traders can submit orders for individual legs or in some cases can submit a single order for multiple financial instruments in an exchange-defined combination. Such orders may be called a strategy order, a spread order, or a variety of other names.

A spread instrument may involve the simultaneous purchase of one security and sale of a related security, called legs, as a unit. The legs of a spread instrument may be options or futures contracts, or combinations of the two. Trades in spread instruments are executed to yield an overall net position whose value, called the spread, depends on the difference between the prices of the legs. Spread instruments may be traded in an attempt to profit from the widening or narrowing of the spread, rather than from movement in the prices of the legs directly. Spread instruments are either "bought" or "sold" depending on whether the trade will profit from the widening or narrowing of the spread, respectively. An exchange often supports trading of common spreads as a unit rather than as individual legs, thus ensuring simultaneous execution of the two legs, eliminating the execution risk of one leg executing but the other failing.

One example of a spread instrument is a calendar spread instrument. The legs of a calendar spread instrument differ in delivery date of the underlier. The leg with the earlier occurring delivery date is often referred to as the lead month contract. A leg with a later occurring delivery date is often referred to as a deferred month contract. Another example of a spread instrument is a butterfly spread instrument, which includes three legs having different delivery dates. The delivery dates of the legs may be equidistant to each other. The counterparty orders that are matched against such a combination order may be individual, "outright" orders or may be part of other combination orders.

In other words, an exchange may receive, and hold or let rest on the books, outright orders for individual contracts as well as outright orders for spreads associated with the individual contracts. An outright order (for either a contract or for a spread) may include an outright bid or an outright offer, although some outright orders may bundle many bids or offers into one message (often called a mass quote).

A spread is an order for the price difference between two contracts. This results in the trader holding a long and a short position in two or more related futures or options on futures contracts, with the objective of profiting from a change in the price relationship. A typical spread product includes multiple legs, each of which may include one or more underlying financial instruments. A butterfly spread product, for example, may include three legs. The first leg may consist of buying a first contract. The second leg may consist of selling two of a second contract. The third leg may consist of buying a third contract. The price of a butterfly spread product may be calculated as:

$$\text{Butterfly} = \text{Leg1} - 2 \times \text{Leg2} + \text{Leg3} \quad \text{(equation 1)}$$

In the above equation, Leg1 equals the price of the first contract, Leg2 equals the price of the second contract and Leg3 equals the price of the third contract. Thus, a butterfly spread could be assembled from two inter-delivery spreads in opposite directions with the center delivery month common to both spreads.

A calendar spread, also called an intra-commodity spread, for futures is an order for the simultaneous purchase and sale of the same futures contract in different contract months (i.e., buying a September CME S&P 500® futures contract and selling a December CME S&P 500 futures contract).

A crush spread is an order, usually in the soybean futures market, for the simultaneous purchase of soybean futures and the sale of soybean meal and soybean oil futures to establish a processing margin. A crack spread is an order for a specific spread trade involving simultaneously buying and selling contracts in crude oil and one or more derivative products, typically gasoline and heating oil. Oil refineries may trade a crack spread to hedge the price risk of their operations, while speculators attempt to profit from a change in the oil/gasoline price differential.

A straddle is an order for the purchase or sale of an equal number of puts and calls, with the same strike price and expiration dates. A long straddle is a straddle in which a long position is taken in both a put and a call option. A short straddle is a straddle in which a short position is taken in both a put and a call option. A strangle is an order for the purchase of a put and a call, in which the options have the same expiration and the put strike is lower than the call strike, called a long strangle. A strangle may also be the sale of a put and a call, in which the options have the same expiration and the put strike is lower than the call strike, called a short strangle. A pack is an order for the simultaneous purchase or sale of an equally weighted, consecutive series of four futures contracts, quoted on an average net change basis from the previous day's settlement price. Packs provide a readily available, widely accepted method for executing multiple futures contracts with a single transaction. A bundle is an order for the simultaneous sale or purchase of one each of a series of consecutive futures contracts. Bundles provide a readily available, widely accepted method for executing multiple futures contracts with a single transaction.

Thus an exchange may match outright orders, such as individual contracts or spread orders (which as discussed above could include multiple individual contracts). The exchange may also imply orders from outright orders. For example, exchange computer system 100 may derive, identify and/or advertise, publish, display or otherwise make available for trading orders based on outright orders.

For example, two different outright orders may be resting on the books, or be available to trade or match. The orders may be resting because there are no outright orders that match the resting orders. Thus, each of the orders may wait or rest on the books until an appropriate outright counteroffer comes into the exchange or is placed by a user of the exchange. The orders may be for two different contracts that only differ in delivery dates. It should be appreciated that such orders could be represented as a calendar spread order. Instead of waiting for two appropriate outright orders to be placed that would match the two existing or resting orders, the exchange computer system may identify a hypothetical spread order that, if entered into the system as a tradable spread order, would allow the exchange computer system to match the two outright orders. The exchange may thus advertise or make available a spread order to users of the exchange system that, if matched with a tradable spread order, would allow the exchange to also match the two resting orders. Thus, the match engine is configured to detect that the two resting orders may be combined into an order in the spread instrument and accordingly creates an implied order.

In other words, the exchange's matching system may imply the counteroffer order by using multiple orders to create the counteroffer order. Examples of spreads include implied IN, implied OUT, 2nd- or multiple-generation, crack spreads, straddle, strangle, butterfly, and pack spreads. Implied IN spread orders are derived from existing outright orders in individual legs. Implied OUT outright orders are derived from a combination of an existing spread order and an existing outright order in one of the individual underlying legs. Implied orders can fill in gaps in the market and allow spreads and outright futures traders to trade in a product where there would otherwise have been little or no available bids and asks.

For example, implied IN spreads may be created from existing outright orders in individual contracts where an outright order in a spread can be matched with other outright orders in the spread or with a combination of orders in the legs of the spread. An implied OUT spread may be created from the combination of an existing outright order in a spread and an existing outright order in one of the individual underlying legs. Implied IN or implied OUT spread may be created when an electronic match system simultaneously works synthetic spread orders in spread markets and synthetic orders in the individual leg markets without the risk to the trader/broker of being double filled or filled on one leg and not on the other leg.

By linking the spread and outright markets, implied spread trading increases market liquidity. For example, a buy in one contract month and an offer in another contract month in the same futures contract can create an implied market in the corresponding calendar spread. An exchange may match an order for a spread product with another order for the spread product. Some existing exchanges attempt to match orders for spread products with multiple orders for legs of the spread products. With such systems, every spread product contract is broken down into a collection of legs and an attempt is made to match orders for the legs. Examples of implied spread trading include those disclosed in U.S. Patent Publication No. 2005/0203826, entitled "Implied Spread Trading System," the entire disclosure of which is incorporated by reference herein and relied upon. Examples of implied markets include those disclosed in U.S. Patent No. 7,039,610, entitled "Implied Market Trading System," the entire disclosure of which is incorporated by reference herein and relied upon.

As an intermediary to electronic trading transactions, the exchange bears a certain amount of risk in each transaction that takes place. To that end, the clearing house implements risk management mechanisms to protect the exchange. One or more of the modules of the exchange computer system 100 may be configured to determine settlement prices for constituent contracts, such as deferred month contracts, of spread instruments, such as for example, settlement module 142.

One or more of the above-described modules of the exchange computer system 100 may be used to gather or obtain data to support the settlement price determination, as well as a subsequent margin requirement determination. For example, the order book module 110 and/or the market data module 112 may be used to receive, access, or otherwise obtain market data, such as bid-offer values of orders currently on the order books. The trade database 108 may be used to receive, access, or otherwise obtain trade data indicative of the prices and volumes of trades that were recently executed in a number of markets. In some cases, transaction data (and/or bid/ask data) may be gathered or obtained from open outcry pits and/or other sources and incorporated into the trade and market data from the electronic trading system(s).

In some cases, the outright market for the deferred month or other constituent contract may not be sufficiently active to provide market data (e.g., bid-offer data) and/or trade data. Spread instruments involving such contracts may nonetheless be made available by the exchange. The market data from the spread instruments may then be used to determine a settlement price for the constituent contract. The settlement price may be determined, for example, through a boundary constraint-based technique based on the market data (e.g., bid-offer data) for the spread instrument, as described in U.S. Patent Publication No. 2015/0073962 entitled "Boundary Constraint-Based Settlement in Spread Markets" ("the '962 Publication"), the entire disclosure of which is incorporated by reference herein and relied upon. Settlement price determination techniques may be implemented to cover calendar month spread instruments having different deferred month contracts.

The disclosed implementations may be implemented in a data transaction processing system that processes data items or objects. Customer or user devices (e.g., computers) may submit electronic data transaction request messages to the data transaction processing system over a data communication network. The electronic data transaction request messages may include, for example, transaction matching parameters, such as instructions and/or values, for processing the data transaction request messages within the data transaction processing system. The instructions may be to buy or sell a quantity of a product at a given value. The instructions may also be conditional, e.g., buy or sell a quantity of a product at a given value if a trade for the product is executed at some other reference value. The data transaction processing system may include a specifically configured matching processor that matches, e.g., automatically, electronic data transaction request messages for the same one of the data items. The specifically configured matching processor may match electronic data transaction request messages based on multiple transaction matching parameters from the different client computers.

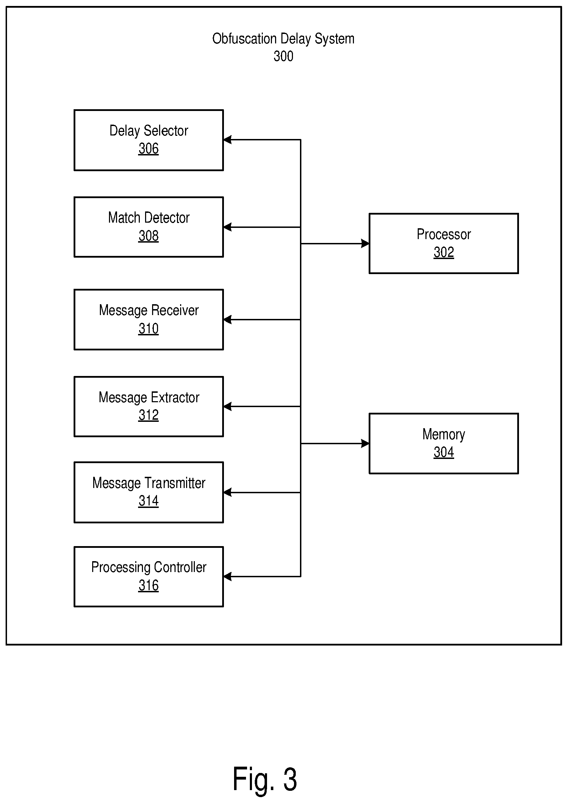

Figure 3 shows an example system 300 for implementation of obfuscation delays. In various implementations the system 300 may implement obfuscation logic 400 discussed below. The system 300 includes a processor 302 and a memory 304 coupled therewith which may be implemented as a processor 202 and memory 204 as described with respect to Figure 2. The processor 302 using instructions stored on the memory 304 may implement a delay selector 306, a match detector 308, a message receiver 310, message extractor 312, a message transmitter 314, and a processing controller 316 to perform various functions of the obfuscation logic 400.

In various implementations, the example system may be used in an electronic trading system to implement obfuscation delays to prevent or slow formation of performance expectations. For example, the system 300 may be integrated into various modules of the system 100. For example, the system 300 may be implemented by any of or collectively by a match engine module 106, a message management module 140, the market data module 112, and/or order processing module 136 of an exchange computing system 100. In some implementations where the system uses PDC arrangement delays, the match engine may implement delays during match processing. In some implementations where the system uses PQD delays, the delay may be implemented by any or any combination of the message management module 140, the market data module 112, and/or order processing module 136. Other technical arrangements may implement the delays using other modules in the request processing stream.

In various implementations, the system 300 may be coupled to the order book module 110 and/or various market data feeds to have control, e.g., for delay application purposes, of outgoing messaging from these modules.

The processor 302 may, via the message receiver 310, receive various incoming electronic data messages 332 including requests from various network participants (e.g., peer-to-peer participants, network users, electronic trading system participants, and/or other participants). As discussed above, the request operations may arrive in a particular order and various priority schemes may be applied to determine the execution order for the requests.

The processor 302 may, via the message extractor 312, initiate processing on the request operation to extract data from the request to facilitate matching of the request to resting requests.

In an illustrative example, a related may include an order to buy or sell a particular product, such as a financial instrument. In the illustrative example, the value may include a price at which the buy/sell action is requested to be executed. The message extractor 312 may provide the extracted message data to the match detector 308. Various technical arrangements other than PDC arrangements and PQD arrangements may apply obfuscation delays at additional or alternative points along the message processing pipeline. As an example, an obfuscation delay may be applied during or prior to provision of the incoming electronic data to the match detector 308. Other arrangements may implement additional or alternative obfuscation delay application points.

In various implementations, the match detector 308 stored in the memory 304 and is executable by the processor 302 to cause the processor 302 to determine whether an electronic data transaction request message will cause or be involved in a match, and if so, whether some but not all (e.g., a partial match), or all (e.g., a full match) of the quantity associated with the electronic data transaction request message is matched. In other words, the match detector determines how much, if any, quantity of an electronic data transaction request message will match and at what value. The match detector then assigns the message value and/or any match values as comparison values to be checked, depending on whether the match detector detects a match at all, and if so, how much quantity associated with the electronic data transaction request message will match.

In various implementations including those that at least partially implement PDC technical arrangements, the match detector 308 may execute delay cycles to apply an obfuscation delay to the processing of selected electronic data messages. The delay cycles may include null processing cycles, idle periods, wait operations, sleep cycles, hold operations, and/or various other processor functions to maintain the appearance of processor (e.g., processor 302) occupation while the results of the match process are delayed.

After match processing the processor 302 via the match detector 308 and/or the message transmitter 314 may generate outgoing messages 334 to support data feeds and/or direct messaging in execution of the result of the match.

The generated outgoing messages may be sent out as generated (e.g., in some cases where obfuscation delays are applied earlier in the message processing pipeline) or queued (e.g., in a publication queue) for transmission.

In various implementations using publication queues, the message transmitter 314 may hold messages in the publication queue for sending. In some cases (e.g., where obfuscation delays are applied earlier in the message processing pipeline) the outgoing messages may progress through the publication queue for outbound transmission at the time at which communication hardware resources are available to complete the transmission of the message.

In various implementations including those implementing PQD arrangements, obfuscation delays may be applied within the publication queue for selected messages. The delays may be applied by holding the selected messages prior to exit to the queue thereby increasing the message-to-message exit duration with the messages immediately preceding the message. In some cases, the publication queue itself may receive an instruction to halt for the selected delay period. During the halt, the queue may prevent messages from exiting the queue in general rather than the hold being applied to a particular message. Externally, no difference may necessarily be apparent whether selected messages within the queue are delay or whether the queue itself is halted at selected times. However, operational difference may be present. For example, delaying the queue may eliminate a computational burden associated with selecting and/or marking particular messages for delay and constrain the system to operate independently of individual message characteristics and/or association to particular transactions. Conversely, delaying selected messages may allow for increased parameters for selection of message delay targets. Additionally or alternatively, random selection of messages may allow for selection of messages without regard to the characteristics of the message even in systems implementing individual message selection for delay application.

To select messages (or particular times) for application of obfuscation delays, the processor 302 may use the delay selector 306. In some cases, random selection of messages/times may be used. In some cases, random selection with a particular average interval between delays may be used. In some cases, random selection to delay a target portion of messages may be used. For example, a system may select a random integer in the range [1-100] for each message a delay messages with a selected number 12 or lower. This may operate to delay about 12% of messages. Other percentages may be used. In some cases, a minimum percentage may be enforced. For example, the selection process may ensure that between 4%-14% of messages are delayed. For example, various pseudorandom selection schemes may ensure a minimum density of selections in addition to a maximum density of selections. Other schemes for random selection may be used.

In some cases, message parameters may be used in selection of messages. For example, messages associated with transactions above a particular request volume may be excluded from delay application. In some contexts, the obfuscation delays may be implemented to mask transactions of unusual volume request size and/or other particularized transaction populations. In some cases, targeted selection of messages for delay may allow for a smaller number of parameter-selected delays to result in the same amount of effective obfuscation as a larger number of randomly selected delays.

In some implementations, specific request types may be selected for application of delay. For example, if an upgrade that affects a specific request population but not other requests is deployed, obfuscation delays may be targeted to those improved requests and not others. As an illustrative example, in conjunction with a targeted upgrade, Fill-And-Kill (FAK) or similar type requests, which are not maintained as resting requests when not filled during their initial match attempt, e.g., they are 'filled' or they are 'killed', may be targeted for obfuscation while other orders are not. Virtually any identifiable sub-population of requests may be targeted for obfuscation delay application, including in contexts other than deployment of targeted upgrades.

Nevertheless, increased determinism in selection of messages may, in some cases, result in decreased robustness to third-party probing of selection criteria. Blended approaches including randomized selection of messages within selected ranges (e.g., associated request volume ranges, ranges for time since last applied delay, and/or other ranges) may be used. In some cases, different parameter ranges may have different likelihoods of delay application. For example, 10% of messages associated with transactions smaller than a first volume may be delayed, while 5% of messages associated with transactions larger than the first volume but smaller than a second volume may be delayed, while messages associated with transactions larger than the second volume may be excluded from delay application.

In some cases, the target number and/or portion of messages that are selected for delay may be selected to obfuscate a specific population of requests. For example, the specific population of requests may include requests above a threshold request volume, requests associated with match average match processing durations above threshold duration, a specific percentile of request volume sizes, and/or other specified population of requests.

In some implementations, the processor 302 via the delay selector 306 may select a length for the applied obfuscation delay. In some cases, the length of the delay may be uniform for all applied obfuscation delays. In some cases, a randomly selected delay within a range may be selected. In some cases, delays may be randomly selected within a particular target distribution of delay lengths. In some cases, a predetermined pattern of delay lengths may be used, such a repeating pattern, a predetermined random pattern, and/or another pattern.

In some implementations, the length of a delay may be selected based on a size of a performance improvement being concurrently deployed to the system. For example, the delays may be selected such that larger delays are implemented in conjunction with larger improvements. For example, a delay (or randomized range of delays) may be selected such that a given externally-applied metric of system performance remains the same (or substantially the same) before and after implementation of an upgrade to the system. Thus, to an external observer of the metric, system performance would be essentially unchanged by the upgrade. Additionally or alternatively, an operator of the system may utilize obfuscation delays to control the level of change that is observable through the metric. In some cases, controlling the change level observable through a first metric may not necessarily affect the change level observable through a second metric different from the first metric. Thus, a change may be apparent through observation of the second metric while obfuscated (at least in part) from observation through the first metric. Nevertheless, application of obfuscation delays may, in some cases, obfuscate changes across multiple different metrics simultaneously.

In some cases, the processor 302 may select a delay length based on the actual measured processing time of the message selected for delay. For example, the processor may begin with a uniform delay (e.g., 1000 microseconds or other uniform delay length) or a delay randomly selected from a starting delay range (e.g., 800 microseconds to 2000 microseconds, or other range). After processing associated with the selected message is complete, the processor may determine how long processing for the selected message lasted. For example, starting with the uniform delay, if processing lasted 598 microseconds, the processor would subtract 598 microseconds from the starting 1000 microseconds resulting in 402 microseconds. The remaining 402 microseconds would be added as a delay. Similarly, for the randomly selected starting range a random number in the range is selected and used in place of the uniform delay in the subtraction calculation. In cases where total processing time associated with a selected message exceeds the starting delay time, no obfuscation delay may necessarily be applied to the selected message. This may ensure that messages with already significant processing burdens are not additionally delayed. Thus, the length of the delay may be selected based on the actual processing time of a request. Other times, time ranges, and time scales may be used.

In various implementations, the length of the delay and/or the selection of the particular message may be configured to make messages below a particular request volume appear to the messages above that particular request volume to increase the difficulty in identifying messages above the particular request volume. The particular request volume may include a mean request volume, a median request volume, a request volume corresponding to a selected percentile request volume, a request volume determined based on request volumes from electronic data messages for a defined historical period, and/or based on input from an operator of the system. Accordingly, the system may select messages for delay from among messages below the particular request volume and select delay lengths to cause the messages to appear to be associated with request volumes greater than the particular request volume. In some cases, such as for systems using the processing time subtraction scheme above, the selection of message may not necessarily need be constrained to messages associated with request volume below the particular request volume, because the subtraction of processing time ensures that the delays are scaled / eliminated for messages exceeding the particular request volume regardless of whether they are selected for delay.

In some cases, the portion of messages selected may be configured based on the portion of messages associated with request volumes above the particular request volume. For example, if 5-10% of messages are associated with request volumes larger than the particular request volume, the system may be configured to apply delay to a similar portion of messages or a portion of messages large enough to spoil the information gained. For example, if 5-10% of messages are delayed in the example, about 50% of messages appearing to be above the particular request volume are actually delayed messages. However, in some cases to prevent instantaneous formation of performance expectations, a portion larger or smaller than 50% may be required. For example, an advantage may be gained in some systems until 90% (or other portion) of messages appearing to be above the particular request volume are actually delayed messages. Conversely, 50% may be larger than necessary-therefore, fewer messages could be selected for delay allowing for a smaller distortion effect on the system. Lower noise systems may require more messages to be delayed to prevent instantaneous formation of performance expectations while higher noise (e.g., noise from jitter, network interruptions, changes in processing efficiency, differences numbers of resting orders matched, and/or other noise) systems may require fewer messages to be delayed. In either example, the number of messages selected for delay may be based on the relative size of the population of messages that the system is attempting to obfuscate.

In some implementations, the length of delay and/or selection of messages for delay may be used to achieve a particular level of externally perceived non-determinism in the system. For example, when viewed externally, simulated non-determinism may appear to be or appear similar to system 'jitter.' Accordingly, the length of delay and/or selection of messages for delay may be used to create a selected level of externally perceived jitter. The precise level of jitter perceived may be selectable by the operator of the trading system. For example, a system may have an actual level jitter level of 1 ms (e.g., via a root-mean-square (RMS), and/or other measure). An operator of the system may increase the level of perceived jitter to 5 ms. Conversely, an operator may selectively delay messages to reduce or remove perceived jitter. Although removing perceived jitter may, in some cases, speed the rate at which static performance expectations are formed, an operator may determine to reduce/eliminate jitter based on other factors and/or as part of an overall strategy of managing performance expectations. For example, removing perceived jitter may increase confidence by participants in the correctness of their perceptions of performance, which may allow for increased efficacy by other delay length and target request selection parameters.

In some cases, the maximum delay lengths may be selected to avoid incidental activation of backup systems. For example, delaying a message in the publication queue may make the publication queue appear to be non-responsive and may present as an apparent crash to a backup system. When the delay exceeds a failover timeout, backup systems may activate. In some implementations, the maximum delay may be selected to be a portion of the failover timeout (e.g., 50%, 75%, 90%, or other portion) to ensure that the delay does not exceed the failover timeout. In some implementations, backup systems may be disarmed for the delay period. For example, a ping from the publication queue may be supplied to the backup systems to distinguish from a crash. For example, the assigned delay length of a message may be added to the failover timeout, such that the failover timeout does not begin (or is appropriately extended) until the delay completes.

In some cases, the processor 302 via the delay selector 306 may generate an interface for operator input to manually select messages for delay and/or manually select delay lengths. Additionally or alternatively, the generated interface may accept inputs for selection schemes for delay targets and lengths.

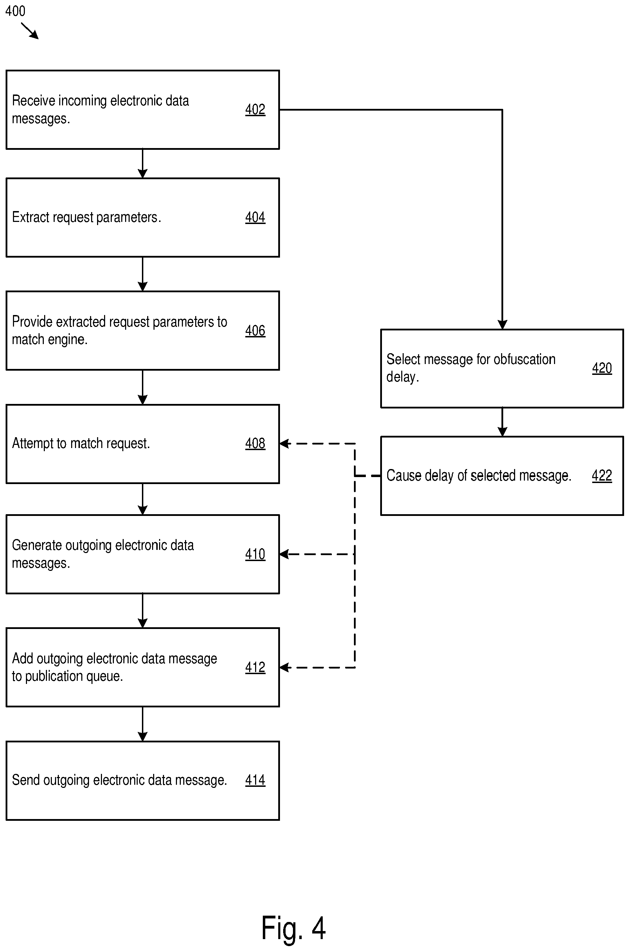

Figure 4 shows example obfuscation logic 400, which may be implemented on the system 300 and/or devices and computer networks such as those described with respect to Figures 1 and 2. Implementations may involve all, more or fewer actions indicated by the blocks of Figure 4. The actions may be performed in the order or sequence shown or in a different sequence. In various implementations, the functions of the obfuscation logic 400 may be carried out by any of or collectively by a match engine module 106, a message management module 140, the market data module 112, and/or order processing module 136 of an exchange computing system 100.

In various implementations, the obfuscation logic 400 may be implemented on low latency processing hardware. To prevent post release of messages before a delay can be assessed, selection operations performed using obfuscation logic 400 may be executed before a request reaches the delay point in the message processing pipeline. Thus, obfuscation logic may execute on processing circuitry with processing latency lower than and/or commensurate with the other processing performed during messaging processing. In some implementations, low latency processing may include an average time to selection (e.g., a delay or no delay selection) less than 10 milliseconds from initiation of the obfuscation logic 400 and/or receipt of a message. However, various implementations may utilize shorter time scales, for example, microsecond, nanosecond, and/or sub-nanosecond processing durations.

As shown in block 402, the obfuscation logic 400 may receive incoming electronic data messages. The incoming data messages may be received in a particular order. In some contexts, such as various example electronic trading systems discussed above, the incoming data messages may be processed, e.g., in series, in the order they are received.

As shown in block 404, the obfuscation logic 400 may extract request parameters from the incoming electronic data messages to facilitate matching at a match engine of the system.

As shown in block 406, the obfuscation logic 400 may provide the extracted request parameters from the messages to the match engine of the electronic trading system.

As shown in block 408, the obfuscation logic 400 may cause the match engine to attempt to match the incoming messages with existing resting electronic data messages in accord with the reception order. As discussed above, each request included within the incoming messages is associated with a match processing duration due to the finite computing capacity of the match processing hardware of the electronic trading system.

As shown in block 410, the obfuscation logic 400 may generate outgoing electronic data messages for corresponding to the incoming electronic data messages. For example, the outgoing electronic data messages may include market data feed messages indicating an update to an order book indicating that a resting order was matched as a result of the incoming request. For example, the outgoing electronic data messages may include one or more confirmations to specific participants that one or more orders placed by the participant have been matched. For example, the outgoing electronic data messages may include market data feed messages indicating that the incoming request was at least partially unmatched and that one or more additional resting orders have been added to the order book.

As shown in block 412, the obfuscation logic 400 may add the generated outgoing electronic data messages to a publication queue for outbound sending. As shown in block 414, the obfuscation logic 400 may send the outgoing electronic data messages upon exit from the queue. In the absence of an obfuscation delay, timing indications for match processing may be correlated with request volume.

As shown in block 420, the obfuscation logic 400 may select messages for obfuscation delay. In various implementations, the selection of messages for delay may occur at a stage (or in parallel with other processing) within the obfuscation logic 400 ahead of the point in the message processing at which the delay occurs. Accordingly, timing of the message selection within the message processing pipeline may be dependent on the particular technical arrangement of the system governed by the obfuscation logic 400. For example, in PDC arrangements, the selection of a message for delay may occur before completion of match processing / outgoing message generation. For example in PQD arrangements, selection may occur before messages are released from the publication queue. The selection may further include selection of delay length, e.g., in implementations where default and/or otherwise non-predetermined delay lengths are used.

As discussed above with respect to the example system 300, the obfuscation logic 400 may select messages based on message characteristics, random selection, time since the last previously delayed message, a target statistical distribution, and/or a combination of these selection mechanisms.

As shown in block 422, the obfuscation logic 400 may apply the delay to the selected message. For example, in PDC arrangements, the obfuscation logic 400 may cause the processor (e.g., processor 302) to perform additional operations to extend the length of match processing / outgoing message generation in accord with the selected delay. For example in PQD arrangements, the obfuscation logic 400 may cause the publication queue to hold the selected message for the additional delay duration. In other arrangements, the obfuscation logic 400 may cause the system to implement delays in other point within the processing pipeline and/or at multiple points within the processing pipeline.

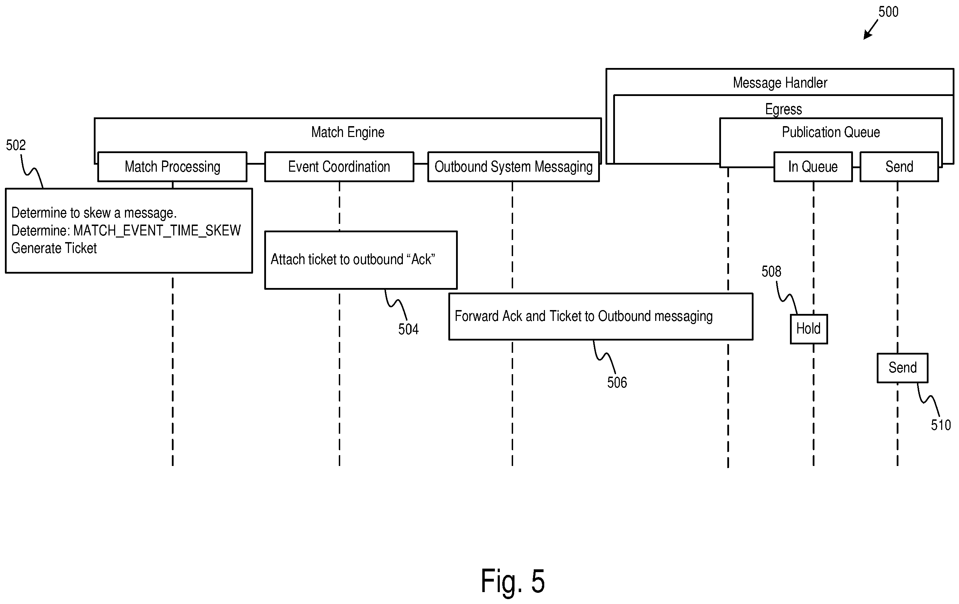

Figure 5 shows a swim lane diagram of an illustrative example obfuscation process 500 that may be implemented in various specific systems, such as, the computer network system 100. At block 502, the match engine may identify a message for 'skew' (e.g., obfuscation delay). The match engine may create a task indicating that the message should be skewed and that a skew length for the message should be calculated. Then, the skew for the message is calculated and placed in a MATCH_EVENT_TIME_SKEW ticket. the At blocks 504 and 506, the internal event coordination and outbound messaging for the match engine forward the MATCH_EVENT_TIME_SKEW along with a generated "Ack" for an acknowledgement of a matched resting order. Once the Ack reaches the outbound publication queue, the message is held at block 508 for the determined skew time before provision to the message sender for publication at block 510.

Table 1 includes various examples.

| Table 1: Examples |
|---|
| 1. A computer-implemented method including: |
| receiving, via a communication interface of an electronic trading system, a plurality of incoming electronic data messages in a reception order, each of the plurality of incoming electronic data messages associated with a respective request with a respective request volume; |
| providing, to a match engine executing on a processor, the plurality of incoming electronic data messages for attempted matching with resting electronic data messages in the reception order; |
| processing, by the match engine executing on the processor, the plurality of incoming electronic data messages, such that for each of the plurality of incoming electronic data messages and due to a computational capacity of the processor: a respective match processing duration is correlated to the respective request volume for that incoming electronic data message; |
| generating, by the match engine executing on the processor and for each one of a plurality of matched electronic data messages of the incoming electronic data messages, at least one respective outgoing electronic data message; |
| providing, by the processor and for each one of the plurality of matched electronic data messages of the incoming electronic data messages, the respective outgoing electronic data message to a publication queue; |
| adding, for at least a first one of the outgoing electronic data messages, an obfuscation delay for which the first one of the outgoing electronic data messages is held in the publication queue to reduce a correlation between respective apparent match processing durations based on a timing indication within the outgoing electronic data messages and the respective request volumes for the plurality of matched electronic data messages; and sending, via the communication interface and upon exit from the publication queue, each of the outgoing electronic data messages, wherein: |
| optionally, the computer-implemented method is in accord with any other example in this table. |
| 2. The computer-implemented method of example 1 or any other example in this table, where: |
| the first one of the outgoing electronic data messages corresponds to a request volume that is smaller than a selected request volume; and |
| application of the obfuscation delay causes a first message-to-message exit duration of the message-to-message exit durations to appear to correspond to a request volume that is larger than the selected request volume. |

(continued)

| Table 1: Examples |
|---|
| 3. The computer-implemented method of example 2 or any other example in this table, where the selected request volume includes:<br>a predetermined threshold request volume;<br>a mean request volume;<br>a median request volume;<br>a request volume corresponding to a selected percentile request volume; and/or<br>a request volume determined based on request volumes from electronic data messages for a defined historical period. |
| 4. The computer-implemented method of example 1 or any other example in this table, where application of the obfuscation delay to the first one of the outgoing electronic data messages causes obfuscation of an application of an operational upgrade to the match engine executing on the processor. |
| 5. The computer-implemented method of example 1 or any other example in this table, where during application of the obfuscation delay to the first one of the outgoing electronic data messages, the match engine performs one or more operations corresponding to a second one of the outgoing electronic data messages. |
| 6. The computer-implemented method of example 1 or any other example in this table, where application of the obfuscation delay to the first one of the outgoing electronic data messages includes a non-deterministic selection of the first one of the outgoing electronic data messages. |
| 7. The computer-implemented method of example 6 or any other example in this table, where the non-deterministic selection includes a selection that is at least in part random and/or pseudorandom. |
| 8. The computer-implemented method of example 1 or any other example in this table, where the obfuscation delay is selected to avoid creation of a net contribution to latency by a group of obfuscation delays for the outgoing electronic data messages. |
| 9. The computer-implemented method of example 1 or any other example in this table, where the obfuscation delay is selected to result in no change to an average request volume throughput of the electronic trading system over a predetermined duration, the average request volume throughput of the electronic trading system over the predetermined duration being proportional to the computational capacity of the processor. |
| 10. The computer-implemented method of example 1 or any other example in this table, where the obfuscation delay is selected to maintain an average request volume throughput of the publication queue at a level equal to or greater than the average request volume throughput of the match engine executing on the processor. |
| 11. The computer-implemented method of example 1 or any other example in this table, where the obfuscation delay is selected such that a frequency of obfuscation delays is proportional to a frequency of request events with a threshold request volume. |
| 12. An electronic trading system including:<br>memory; and<br>processing circuitry in data communication with the memory, the processing circuitry<br>        configured to execute:<br>                a message module stored on the memory, the message module<br>                configured to cause the processing circuitry to:<br>                        receive a plurality of incoming electronic data messages in a reception order, each of the plurality of incoming electronic data messages associated with a respective request with a respective request volume;<br>                        provide, to a match engine, the plurality of incoming electronic data messages for attempted matching with resting electronic data messages in the reception order; and<br>                        send, upon exit from a publication queue, each of a plurality of outgoing electronic data messages;<br>                the match engine to cause the processing circuitry to: |

(continued)

| Table 1: Examples |
|---|
| process the plurality of incoming electronic data messages, such that for each of the plurality of incoming electronic data messages and due to a computational capacity of the processing circuitry: a respective match processing duration is correlated to the respective request volume for that incoming electronic data message; |
| generate, for each one of a plurality of matched electronic data messages of the incoming electronic data messages, at least one respective outgoing electronic data message of the plurality of outgoing electronic data messages; and |
| provide, for each one of the plurality of matched electronic data messages of the incoming electronic data messages, the respective outgoing electronic data message to the publication queue; and |
| an obfuscation module to cause the processing circuitry to: |
| add, for at least a first one of the plurality of outgoing electronic data messages, an obfuscation delay for which the first one of the outgoing electronic data messages is held in the publication queue to reduce a correlation between respective apparent match processing durations based on a timing indication within the outgoing electronic data messages and the respective request volumes for the plurality of matched electronic data messages, wherein: |
| optionally, the electronic trading system is in accord with any other example is this table. |
| 13. The electronic trading system of example 12 or any other example in this table, where: |
| the first one of the outgoing electronic data messages corresponds to a request volume that is smaller than a selected request volume; and |
| application of the obfuscation delay causes a first message-to-message exit duration of the message-to-message exit durations to appear to correspond to a request volume that is larger than the selected request volume. |
| 14. The electronic trading system of example 13 or any other example in this table, where the selected request volume includes: |
| a predetermined threshold request volume; |
| a mean request volume; |
| a median request volume; |
| a request volume corresponding to a selected percentile request volume; and/or |
| a request volume determined based on request volumes from electronic data messages for a defined historical period. |
| 15. The electronic trading system of example 12 or any other example in this table, where processing circuitry is configured to execute the match engine by applying the obfuscation delay to the first one of the plurality of outgoing electronic data messages to cause obfuscation of an application of an operational upgrade to the match engine. |
| 16. The electronic trading system of example 12 or any other example in this table, where processing circuitry is configured to execute the match engine by applying the obfuscation delay to the first one of the outgoing electronic data messages while the match engine performs one or more operations corresponding to a second one of the outgoing electronic data messages. |
| 17. The electronic trading system of example 12 or any other example in this table, where the processing circuitry is configured to execute the obfuscation module to apply the obfuscation delay to the first one of the plurality of outgoing electronic data messages via a non-deterministic selection of the first one of the plurality of outgoing electronic data messages. |
| 18. The electronic trading system of example 17 or any other example in this table, where the non-deterministic selection includes a selection that is at least in part random and/or pseudorandom. |

(continued)

| Table 1: Examples |
| --- |
| 19. The electronic trading system of example 12 or any other example in this table, where the processing circuitry is configured to select the obfuscation delay to avoid creation of a net contribution to latency by a group of obfuscation delays for the plurality of outgoing electronic data messages. |
| 20. The electronic trading system of example 12 or any other example in this table, where the processing circuitry is configured to select the obfuscation delay to result in no change to an average request volume throughput of the electronic trading system over a predetermined duration, the average request volume throughput of the electronic trading system over the predetermined duration being proportional to the computational capacity of the processing circuitry. |
| 21. The electronic trading system of example 12 or any other example in this table, where the processing circuitry is configured to select the obfuscation delay to maintain an average request volume throughput of the publication queue at a level equal to or greater than the average request volume throughput of the match engine. |
| 22. The electronic trading system of example 12 or any other example in this table, where the processing circuitry is configured to select the obfuscation delay such that a frequency of obfuscation delays is proportional to a frequency of request events with a threshold request volume. |
| 23. An electronic trading system including: |
| means for receiving a plurality of incoming electronic data messages in a reception order, each of the plurality of incoming electronic data messages associated with a respective request with a respective request volume; |
| means for providing, to a match engine, the plurality of incoming electronic data messages for attempted matching with resting electronic data messages in the reception order; |
| means for processing, by the match engine, the plurality of incoming electronic data messages, such that for each of the plurality of incoming electronic data messages and due to a hardware computational processing capacity associated with the match engine: respective match processing duration is correlated to the respective request volume for that incoming electronic data message; a |
| means for generating, by the match engine and for each one of a plurality of matched electronic data messages of the incoming electronic data messages, at least one respective outgoing electronic data message; |
| means for providing, for each one of the plurality of matched electronic data messages of the incoming electronic data messages, the respective outgoing electronic data message to a publication queue; |
| means for adding, for at least a first one of the outgoing electronic data messages, an obfuscation delay for which the first one of the outgoing electronic data messages is held in the publication queue to reduce a correlation between respective apparent match processing durations based on a timing indication within the outgoing electronic data messages and the respective request volumes for the plurality of matched electronic data messages; and |
| means for sending, upon exit from the publication queue, each of the outgoing electronic data messages, wherein: optionally, the electronic trading system is in accord with any other example is this table. |
| 26. A system including a processor configured to perform the method of any other example in the table. |
| 27. A product including: |
| a machine-readable medium; and |
| instructions stored on the machine-readable medium, the instructions configured to cause a processor to perform the method of any other example in the table, where: optionally, the instructions are executable; optionally, the machine-readable medium is non-transitory optionally, the machine-readable medium is other than a transitory signal. |

The illustrations of the implementations described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features of particular implementations of the invention. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

One or more implementations of the disclosure may be referred to herein, individually and/or collectively, by the term "invention" merely for convenience and without intending to voluntarily limit the scope of this application to any particular invention or inventive concept. Moreover, although specific implementations have been illustrated and described herein, it should be appreciated that any subsequent arrangement designed to achieve the same or similar purpose may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. This disclosure is not to be interpreted as reflecting an intention that the claimed implementations require more features than are expressly recited in each claim. Rather, as the following claims reflect, inventive subject matter may be directed to less than all of the features of any of the disclosed implementations. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims that are intended to define the scope of this invention.

**Claims**

1. A computer-implemented method including:

   receiving, via a communication interface of an electronic trading system, a plurality of incoming electronic data messages in a reception order, each of the plurality of incoming electronic data messages associated with a respective request with a respective request volume;
   providing, in the reception order as each incoming electronic data message is received to a match engine executing on a processor, the plurality of incoming electronic data messages for attempted matching with resting electronic data messages;
   processing, by the match engine executing on the processor, the plurality of incoming electronic data messages, such that for each of the plurality of incoming electronic data messages and due to a computational capacity of the processor: a respective match processing duration is correlated to the respective request volume for that incoming electronic data message;
   generating, by the match engine executing on the processor and for each one of a plurality of matched electronic data messages of the incoming electronic data messages, at least one respective outgoing electronic data message;
   providing, by the processor and for each one of the plurality of matched electronic data messages of the incoming electronic data messages, the respective outgoing electronic data message to a publication queue;

adding, for at least a first one of the outgoing electronic data messages, an obfuscation delay for which the first one of the outgoing electronic data messages is held in the publication queue to reduce a correlation between respective apparent match processing durations based on a timing indication within the outgoing electronic data messages and the respective request volumes for the plurality of matched electronic data messages; and

sending, via the communication interface and upon exit from the publication queue, each of the outgoing electronic data messages.

2. The computer-implemented method of claim 1, where:

the first one of the outgoing electronic data messages corresponds to a request volume that is smaller than a selected request volume; and
application of the obfuscation delay causes a first message-to-message exit duration of the message-to-message exit durations to appear to correspond to a request volume that is larger than the selected request volume.

3. The computer-implemented method of claim 2, where the selected request volume includes:

a predetermined threshold request volume;
a mean request volume;
a median request volume;
a request volume corresponding to a selected percentile request volume; and/or
a request volume determined based on request volumes from electronic data messages for a defined historical period.

4. The computer-implemented method of any preceding claim, where application of the obfuscation delay to the first one of the outgoing electronic data messages causes obfuscation of an application of an operational upgrade to the match engine executing on the processor.

5. The computer-implemented method of any preceding claim, where during application of the obfuscation delay to the first one of the outgoing electronic data messages, the match engine performs one or more operations corresponding to a second one of the outgoing electronic data messages.

6. The computer-implemented method of any preceding claim, where application of the obfuscation delay to the first one of the outgoing electronic data messages includes a non-deterministic selection of the first one of the outgoing electronic data messages.

7. The computer-implemented method of claim 6, where the non-deterministic selection includes a selection that is at least in part random and/or pseudorandom.

8. The computer-implemented method of any preceding claim, where the obfuscation delay is selected to avoid creation of a net contribution to latency by a group of obfuscation delays for the outgoing electronic data messages.

9. The computer-implemented method of any one of claims 1 to 7, where the obfuscation delay is selected to result in no change to an average request volume throughput of the electronic trading system over a predetermined duration, the average request volume throughput of the electronic trading system over the predetermined duration being proportional to the computational capacity of the processor.

10. The computer-implemented method of any one of claims 1 to 7, where the obfuscation delay is selected to maintain an average request volume throughput of the publication queue at a level equal to or greater than the average request volume throughput of the match engine executing on the processor.

11. The computer-implemented method of any one of claims 1 to 7, where the obfuscation delay is selected such that a frequency of obfuscation delays is proportional to a frequency of request events with a threshold request volume.

12. An electronic trading system arranged to perform the method of any one of claims 1 to 3 and 7 including:

memory; and
processing circuitry in data communication with the memory, the processing circuitry configured to execute:

a message module stored on the memory, the message module configured to cause the processing circuitry to:

receive a plurality of incoming electronic data messages in a reception order, each of the plurality of incoming electronic data messages associated with a respective request with a respective request volume;

provide, in the reception order as each incoming electronic data message is received to a match engine, the plurality of incoming electronic data messages for attempted matching with resting electronic data messages; and send, upon exit from a publication queue, each of a plurality of outgoing electronic data messages;

the match engine to cause the processing circuitry to:

process the plurality of incoming electronic data messages, such that for each of the plurality of incoming electronic data messages and due to a computational capacity of the processing circuitry: a respective match processing duration is correlated to the respective request volume for that incoming electronic data message;

generate, for each one of a plurality of matched electronic data messages of the incoming electronic data messages, at least one respective outgoing electronic data message of the plurality of outgoing electronic data messages; and

provide, for each one of the plurality of matched electronic data messages of the incoming electronic data messages, the respective outgoing electronic data message to the publication queue; and

an obfuscation module to cause the processing circuitry to:

add, for at least a first one of the plurality of outgoing electronic data messages, an obfuscation delay for which the first one of the outgoing electronic data messages is held in the publication queue to reduce a correlation between respective apparent match processing durations based on a timing indication within the outgoing electronic data messages and the respective request volumes for the plurality of matched electronic data messages.

13. The electronic trading system of claim 12, where the processing circuitry is further configured to execute the match engine by performing the method of any one of claims 4 to 6, 8 to 11.

14. An electronic trading system including:

means for receiving a plurality of incoming electronic data messages in a reception order, each of the plurality of incoming electronic data messages associated with a respective request with a respective request volume;

means for providing, in the reception order as each incoming electronic data message is received to a match engine, the plurality of incoming electronic data messages for attempted matching with resting electronic data messages;

means for processing, by the match engine, the plurality of incoming electronic data messages, such that for each of the plurality of incoming electronic data messages and due to a hardware computational processing capacity associated with the match engine: a respective match processing duration is correlated to the respective request volume for that incoming electronic data message;

means for generating, by the match engine and for each one of a plurality of matched electronic data messages of the incoming electronic data messages, at least one respective outgoing electronic data message;

means for providing, for each one of the plurality of matched electronic data messages of the incoming electronic data messages, the respective outgoing electronic data message to a publication queue;

means for adding, for at least a first one of the outgoing electronic data messages, an obfuscation delay for which the first one of the outgoing electronic data messages is held in the publication queue to reduce a correlation between respective apparent match processing durations based on a timing indication within the outgoing electronic data messages and the respective request volumes for the plurality of matched electronic data messages; and

means for sending, upon exit from the publication queue, each of the outgoing electronic data messages.

Fig. 1

Fig. 1A

200

Bus
208

Processor
202

Instructions
212

Memory
204

Instructions
212

Drive Unit
206

Machine Readable
Medium
210

Instructions
212

Display
214

User Input Device
216

Communication Interface
218

Internet and/or Other Network(s)
220

Fig. 2

Obfuscation Delay System
300

Delay Selector
306

Match Detector
308

Message Receiver
310

Message Extractor
312

Message Transmitter
314

Processing Controller
316

Processor
302

Memory
304

Fig. 3

400

| Receive incoming electronic data messages. | 402 |

| Extract request parameters. | 404 |

| Provide extracted request parameters to match engine. | 406 |

| Attempt to match request. | 408 |

| Generate outgoing electronic data messages. | 410 |

| Add outgoing electronic data message to publication queue. | 412 |

| Send outgoing electronic data message. | 414 |

| Select message for obfuscation delay. | 420 |

| Cause delay of selected message. | 422 |

Fig. 4

Fig. 5

Europäisches
Patentamt

European
Patent Office

Office européen
des brevets

# EUROPEAN SEARCH REPORT

Application Number

EP 24 15 4889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/075530 A1 (KAVANAGH KYLE D [US] ET AL) 15 March 2018 (2018-03-15) * paragraph [0016] - paragraph [0297]; figures 1-7 * | 1-14 | INV. G06Q40/04 |
| A | VASILIOS MAVROUDIS: "Market Manipulation as a Security Problem", ARXIV.ORG, CORNELL UNIVERSITY LIBRARY, 201 OLIN LIBRARY CORNELL UNIVERSITY ITHACA, NY 14853, 29 March 2019 (2019-03-29), XP081159698, * section 2 Background, section 3 Security Considerations, section 4 Manipulations Techniques, section 5 Countermeasures * | 1-14 | |
| A | US 11 568 485 B2 (IEX GROUP INC [US]) 31 January 2023 (2023-01-31) * claims 1-5, 11 * | 1-14 | |
| A | WO 2016/135705 A1 (ROYAL BANK OF CANADA [CA]) 1 September 2016 (2016-09-01) * paragraph [0180] - paragraph [0182] * * paragraph [0129] - paragraph [0136] * * paragraph [0250] * * figure 3 * | 1-14 | TECHNICAL FIELDS SEARCHED (IPC) G06Q |

The present search report has been drawn up for all claims

| Place of search | Date of completion of the search | Examiner |
|---|---|---|
| The Hague | 20 March 2024 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 411 623 A1

## ANNEX TO THE EUROPEAN SEARCH REPORT
## ON EUROPEAN PATENT APPLICATION NO.

EP 24 15 4889

20-03-2024

| Patent document cited in search report | | Publication date | Patent family member(s) | | Publication date |
|---|---|---|---|---|---|
| US 2018075530 | A1 | 15-03-2018 | EP | 3510552 A1 | 17-07-2019 |
| | | | US | 2018075530 A1 | 15-03-2018 |
| | | | WO | 2018048999 A1 | 15-03-2018 |
| US 11568485 | B2 | 31-01-2023 | AU | 2013315370 A1 | 12-03-2015 |
| | | | AU | 2018217228 A1 | 30-08-2018 |
| | | | AU | 2020203050 A1 | 28-05-2020 |
| | | | BR | 112015005550 A2 | 04-07-2017 |
| | | | CA | 2871322 A1 | 20-03-2014 |
| | | | CA | 3015052 A1 | 20-03-2014 |
| | | | CA | 3094923 A1 | 20-03-2014 |
| | | | CA | 3160090 A1 | 20-03-2014 |
| | | | CA | 3160095 A1 | 20-03-2014 |
| | | | EP | 2896010 A1 | 22-07-2015 |
| | | | EP | 3726451 A1 | 21-10-2020 |
| | | | HK | 1208750 A1 | 11-03-2016 |
| | | | JP | 6433427 B2 | 05-12-2018 |
| | | | JP | 6757781 B2 | 23-09-2020 |
| | | | JP | 7116128 B2 | 09-08-2022 |
| | | | JP | 2015532986 A | 16-11-2015 |
| | | | JP | 2019050013 A | 28-03-2019 |
| | | | JP | 2020198127 A | 10-12-2020 |
| | | | JP | 2020205075 A | 24-12-2020 |
| | | | KR | 20150053985 A | 19-05-2015 |
| | | | KR | 20170041287 A | 14-04-2017 |
| | | | KR | 20190114033 A | 08-10-2019 |
| | | | SG | 10201706072P A | 28-09-2017 |
| | | | SG | 11201501568S A | 29-04-2015 |
| | | | US | 2015073967 A1 | 12-03-2015 |
| | | | US | 2020090272 A1 | 19-03-2020 |
| | | | US | 2020134720 A1 | 30-04-2020 |
| | | | US | 2020134721 A1 | 30-04-2020 |
| | | | WO | 2014043420 A1 | 20-03-2014 |
| WO 2016135705 | A1 | 01-09-2016 | AU | 2016224908 A1 | 21-09-2017 |
| | | | BR | 112017018133 A2 | 10-04-2018 |
| | | | CA | 2922072 A1 | 27-08-2016 |
| | | | CN | 107534584 A | 02-01-2018 |
| | | | EP | 3269090 A1 | 17-01-2018 |
| | | | HK | 1248934 A1 | 19-10-2018 |
| | | | JP | 6892824 B2 | 23-06-2021 |
| | | | JP | 2018514105 A | 31-05-2018 |
| | | | JP | 2021166385 A | 14-10-2021 |
| | | | KR | 20170139004 A | 18-12-2017 |
| | | | KR | 20230024423 A | 20-02-2023 |
| | | | KR | 20240006086 A | 12-01-2024 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 24 15 4889

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2024

| Patent document cited in search report | Publication date | Patent family member(s) | Publication date |
|---|---|---|---|
| | | SG 10201913740X A | 30-03-2020 |
| | | SG 10201913790V A | 30-03-2020 |
| | | SG 10202110018R A | 28-10-2021 |
| | | SG 11201707004W A | 28-09-2017 |
| | | WO 2016135705 A1 | 01-09-2016 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10078813
- US 9697569 B
- US 7769667 B
- US 7831491 B
- US 20050096999 A1
- US 07467513
- US 20150127516 A
- US 7853499 B
- US 20050203826 A
- US 7039610 B
- US 20150073962 A